# EUROPÄISCHE PATENTSCHRIFT

(11) **EP 2 739 008 B1**
(45) Veröffentlichungstag und Bekanntmachung des Hinweises auf die Patenterteilung: **19.04.2017**
(21) Anmeldenummer: 12195339.2
(22) Anmeldetag: 03.12.2012
(51) Int. Cl.: H04L 29/08, H04W 84/12, H04W 88/08

(54) **Verfahren zum Bereitstellen von lokal gespeicherten Content-Daten für ein mobiles Endgerät**
Method for the provision of locally stored content data for a mobile terminal
Procédé de préparation de données de contenu mémorisées localement pour un terminal mobile

(43) Veröffentlichungstag der Anmeldung: 04.06.2014
(73) Patentinhaber: Krüger, Benjamin, 82031 Grünwald (DE); Köhler, Ulrich, 85540 Haar (DE)
(72) Erfinder: Krüger, Benjamin, 82031 Grünwald (DE); Köhler, Ulrich, 85540 Haar (DE)
(74) Vertreter: Isarpatent

(56) Entgegenhaltungen:
- WO-A1-2010/001188
- WO-A1-2012/125464
- US-B1- 6 697 850
- LI X XU J WANG Z HAO ZTE CORPORATION L: "Information-Centric Network in an ISP; draft-li-icnrg-icn-isp-00.txt", INFORMATION-CENTRIC NETWORK IN AN ISP; DRAFT-LI-ICNRG-ICN-ISP-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 9. Juli 2012 (2012-07-09), Seiten 1-8, XP015083908, [gefunden am 2012-07-09]

## Beschreibung

Die Erfindung betrifft ein Verfahren und eine Vorrichtung zum Bereitstellen von lokal gespeicherten Content-Daten für ein mobiles Endgerät, insbesondere ein Smartphone.

Die US 6697850 B1 beschreibt ein Verfahren und ein System zum Bereitstellen von Content-Daten für ein mobiles Endgerät eines Nutzers. Ein Nutzerendgerät sendet bei dem System über eine Satellitenfunkschnittstelle eine Anfrage für eine Webseite an einen im Erdorbit kreisenden Satelliten, welcher über einen darin integrierten Cache-Datenspeicher verfügt. Nach Empfang der Anfrage wird durch den Satelliten bestimmt, ob die angefragte Webseite in dem Cache-Speicher des Satelliten vorhanden ist oder nicht. Falls die angefragte Webseite in dem Cache-Speicher vorhanden ist, wird sie über eine Antenne des Satelliten in einer Downlink-Verbindung zu dem anfragenden mobilen Endgerät übertragen.

Mobile Endgeräte, beispielsweise Smartphones oder Tablet-PCs erfreuen sich immer größerer Beliebtheit. Für die Nutzer bzw. Anwender besteht die Möglichkeit, eine Vielzahl unterschiedlicher Anwendungsprogramme bzw. Apps herunterzuladen und für alle erdenklichen Situationen im Alltag zu verwenden. Dabei werden die über eine drahtlose Schnittstelle ausgetauschten Daten bzw. Dateien immer komplexer und umfangreicher. Neben pdf-Dateien, Bilddaten oder Präsentationen werden zunehmend auch hochqualitative Videos, Animationen, Spiele und dergleichen auf das mobile Endgerät des Nutzers übertragen. Mobile Endgeräte wie beispielsweise Smartphones, PDAs oder Tablet-PCs, ermöglichen es dem Nutzer, über Funknetze mit anderen Nutzern zu kommunizieren bzw. Daten auszutauschen. Herkömmliche mobile Endgeräte sind dafür ausgestattet, sowohl mit WLAN als auch mit Mobilfunknetzwerken zu kommunizieren. In einem WLAN-Netz können mobile Endgeräte Daten in unterschiedlichen Formen bzw. Formaten untereinander unter Verwendung von Standardprotokollen, wie beispielsweise IEEE 802.11b austauschen. Der Zugriff auf Inhalte über das Internet erfolgt über einen Webbrowser. Der Webbrowser stellt eine Software dar, die es dem Nutzer erlaubt, dem Nutzer digitale Inhalte und andere Informationen, die üblicherweise innerhalb von Webseiten innerhalb des Internets oder einem lokalen Netzwerk LAN zur Verfügung gestellt werden, anzuzeigen und je nach Inhalt interaktiv damit zu arbeiten. Das am häufigsten zur Bereitstellung solcher Inhalte genutzte Protokoll ist das HTTP (Hyper-Text Transfer Protocol). Dieser offene internationale Protokollstandard ermöglicht den Zugang zu statischen oder dynamischen Seiten sowie der zugehörigen Inhalte bzw. Content-Daten, insbesondere Bilder und Videos, welche beispielsweise in XHTML oder HTML erstellt worden sind und von dem Browser der mobilen Endgeräte dem Nutzer auf einem Display angezeigt werden können.

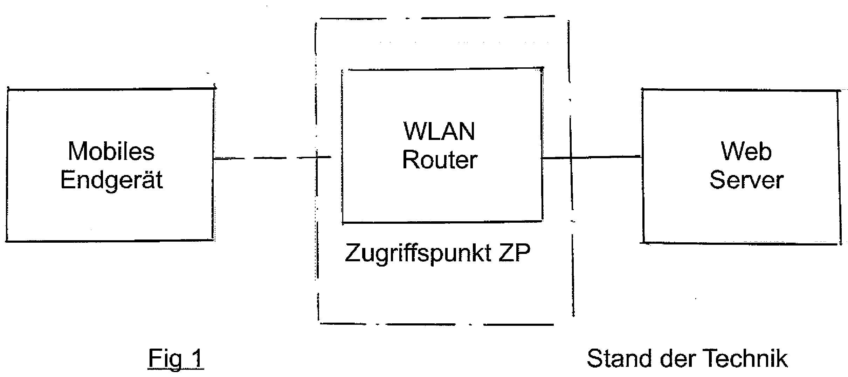

Eine neben dem direkten Transfer von Daten über Mobilfunknetze weitverbreitete Möglichkeit, über mobile Endgeräte mit dem Internet bzw. einem Intranet zu kommunizieren, ist die Kommunikation über ein WLAN-Netzwerk. Dabei wird dem Nutzer über einen oder mehrere WLAN-Zugriffspunkte bzw. WLAN-Access-Points der Zugang zu einem bestimmten Netzwerk ermöglicht. Diese Zugangspunkte bzw. Access Points werden über Router bzw. Switches an ein drahtgebundenes Kommunikationsnetzwerk angeschlossen, wie schematisch in Fig. 1 dargestellt. Dabei ist der WLAN-Router in einem sogenannten Hotspot aufgestellt, der sich beispielsweise in Hotels, Flughäfen, in Gaststätten, in Cafes, in Einkaufszentren, aber auch in mobilen Fahrzeugen, insbesondere Flugzeugen, Zügen oder Schiffen, befinden kann. Nutzer mit mobilen Endgeräten können, sofern die Geräte über eine WLAN/Bluetooth-Karte bzw. eine entsprechende eingebettete Funktion als Schnittstelle verfügen, über das Netzwerk auf Server zugreifen, um E-Mails zu senden, im Internet zu surfen, um auf Dokumente bzw. Content-Daten zuzugreifen oder um sich beispielsweise Videos anzusehen. Herkömmliche Zugriffspunkte bzw. Hotspots, wie man sie beispielsweise in Hotels oder an anderen öffentlichen Orten findet, erlauben es den Nutzern, sich einzuloggen und nach erfolgreichem Login können sich die Nutzer in das Internet einwählen. Derartige Zugriffspunkte schließen in vielen Fällen Nutzer vom Zugriff aus, die keine Zugangsberechtigung besitzen. Beispielsweise kann ein Hotel den Zugang zum Internet exklusiv nur für die Gäste des Hotels zur Verfügung stellen. Herkömmliche Zugriffspunkte bzw. Access Points erlauben es mobilen oder stationären Endgeräten, ein passwortgeschütztes oder passwortloses Login durchzuführen und weisen diesen Endgeräten anschließend über ein DHCP-Protokoll eine IP-Adresse und eine Netzwerkkonfiguration zu. Einige WLAN-Router erlauben eine browserbasierte Konfiguration und besitzen zu diesem Zwecke einen integrierten HTTP-Server, der eine Administrationsoberfläche für den Nutzer bzw. Administrator zugänglich macht. Allerdings ist ein derartiger HTTP-Server nicht auf hohe Geschwindigkeiten optimiert, da die Daten über ein Netzwerk gesendet werden müssen, das zu einer Geschwindigkeitseinscturänkung führt. Der Server ist somit nicht in der Lage, mehrere mobile Endgeräte von verschiedenen Nutzern gleichzeitig zu bewältigen oder Multimediadaten-Inhalte an die mobilen Endgeräte der Nutzer auszuliefern.

Ein Nachteil bei einem herkömmlichen System, wie in Fig. 1 dargestellt, besteht darin, dass insbesondere bei der Übertragung von Multimediadaten, die große Datenmengen umfassen, das Bereitstellen der Daten über das mobile Endgerät des Nutzers aufgrund der begrenzten Bandbreite relativ lange dauert. Ein weiterer Nachteil besteht darin, dass zwischen dem Zugriffspunkt und dem Webserver eine Datenverbindung über ein Netzwerk bestehen muss, damit ein herkömmlicher Zugriffspunkt die Möglichkeit bietet, ohne Netzwerkanbindung Content-Daten, insbesondere Multimediadaten, einem mobilen Endgerät eines Nutzers bereitzustellen. Zum Bereitstellen von Daten für das mobile Endgerät wird bei der herkömmlichen Anordnung, wie in Fig. 1 dargestellt, muss der WLAN-Router zunächst eine Verbindung zu einem entfernten Server, insbesondere Webserver, aufbauen. Hierdurch wird die Bereitstellung der Daten des mobilen Endgerätes des Nutzers zusätzlich verzögert. Weiterhin werden die von dem Nutzer des mobilen Endgerätes angefragten Daten von dem Server über ein Netzwerk bzw. eine Datenverbindung an den Zugriffspunkt übertragen bevor sie von dort über die drahtlose Schnittstelle zu dem mobilen Endgerät des Nutzers gelangen. Die Datenverbindung zwischen dem Server und dem Zugriffspunkt bietet einen Angriffspunkt zur Manipulation von Daten für Dritte. Ein weiterer Nachteil der in Fig. 1 dargestellten herkömmlichen Anordnung besteht darin, dass die durch den Server zur Verfügung gestellten Website-Inhalte in vielen Fällen nicht für die Darstellung auf einem mobilen Endgerät optimiert sind und daher für den Nutzer in vielen Fällen nur schwer bedienbar sind. Ein weiterer Nachteil der in Fig. 1 dargestellten herkömmlichen Anordnung besteht darin, dass der Betreiber des Zugriffspunktes nur eine begrenzte Kontrolle über die Dateninhalte hat, die durch den Nutzer des mobilen Endgerätes über den Zugriffspunkt mit dem Netzwerk ausgetauscht werden.

Es ist daher eine Aufgabe der vorliegenden Erfindung, eine Vorrichtung und ein Verfahren zum Bereitstellen von Daten für ein mobiles Endgerät eines Nutzers durch einen Zugriffspunkt zu schaffen, bei dem die Daten mit hoher Geschwindigkeit und sicher dem Nutzer des mobilen Endgerätes zur Verfügung gestellt werden.

Diese Aufgabe wird erfindungsgemäß durch ein Verfahren mit den in Patentanspruch 1 angegebenen Merkmalen gelöst.

Das erfindungsgemäße Verfahren bietet den Vorteil, dass die Content-Daten dem mobilen Endgerät des Nutzers bereitgestellt werden können, ohne dass eine Verbindung zu dem Internet oder einem firmeninternen Intranet bestehen muss.

Ein weiterer Vorteil des erfindungsgemäßen Verfahrens zum Bereitstellen der Content-Daten besteht darin, dass keine Installation von zusätzlichen Programmen bzw. Anwendungsprogrammen auf dem mobilen Endgerät des Nutzers erforderlich ist.

Darüber hinaus bietet das erfindungsgemäße Verfahren einen hohen Sicherheitsstandard bei der Kommunikation und dem Datenaustausch, da keine Datenverbindung über das Internet bzw. ein Intranet erfolgt. Das Risiko eines Daten- oder Informationsdiebstahls sowie das Risiko der Einschleusung von Schadsoftware wird hierdurch signifikant vermindert.

Ferner können die in dem Datenspeicher lokal abgelegten Content-Daten zur Wiedergabe auf einem mobilen Endgerät, insbesondere einem Smartphone, optimiert gespeichert sein.

Ein weiterer Vorteil des erfindungsgemäßen Verfahrens besteht darin, dass die Datenübertragung der Content-Daten zu dem mobilen Endgerät mit sehr hoher Geschwindigkeit erfolgen kann, da die Content-Daten bereits lokal auf dem Datenspeicher des Zugriffspunktes abgelegt sind und nicht über ein Netzwerk geladen werden müssen.

Das erfindungsgemäße Verfahren erlaubt es, Content-Daten für eine große Anzahl von mobilen Endgeräten, die sich in der Nähe des Zugriffspunktes befinden, autonom und ohne Verbindung zu einem Netzwerk schnell und sicher zur Verfügung zu stellen.

Mit dem erfindungsgemäßen Verfahren ist es zudem möglich, anhand der übertragenen Nutzerdaten für die verschiedenen Nutzer der jeweiligen mobilen Endgeräte unverwechselbare Nutzerprofile zu erstellen, die anschließend gespeichert und weiterverarbeitet werden können.

Ein weiterer Vorteil des erfindungsgemäßen Verfahrens besteht darin, dass allein der Betreiber des Zugriffspunktes die zur Verfügung gestellten Content-Daten kontrolliert und über deren Inhalt entscheidet.

Bei einer möglichen Ausführungsform des erfindungsgemäßen Verfahrens wird dem mobilen Endgerät bei dessen Anmeldung an dem Zugriffspunkt durch einen auf den Zugriffspunkt implementierten DHCP-Server eine freie IP-Adresse aus einer vorkonfigurierten Gruppe von freien IP-Adressen als Client-IP-Adresse zugewiesen, welche nach Abmeldung des mobilen Endgerätes von dem Zugriffspunkt in die Gruppe von freien IP-Adressen zurückgegeben wird.

Bei einer möglichen Ausführungsform des erfindungsgemäßen Verfahrens wird der MAC-Adresse oder der IMEI des mobilen Endgerätes die zugewiesene Client-IP-Adresse zugeordnet.

Bei einer möglichen Ausführungsform des erfindungsgemäßen Verfahrens sendet ein auf dem Zugriffspunkt implementierter DNS-Server auf eine DNS Browser-Anfrage des mobilen Endgerätes hin eine vorkonfigurierte IP-Adresse des Zugriffspunktes an den Browser des mobilen Endgerätes.

Bei einer möglichen Ausführungsform des erfindungsgemäßen Verfahrens werden die lokal gespeicherten Content-Daten dem mobilen Endgerät des Nutzers bereitgestellt, nachdem sich der Nutzer für die jeweiligen Content-Daten als empfangsberechtigt gegenüber dem Zugriffspunkt authentifiziert hat.

Bei einer möglichen Ausführungsform des erfindungsgemäßen Verfahrens überträgt das mobile Endgerät zur Authentifizierung des Nutzers einen Authentifizierungscode an den Zugriffspunkt.

Dieser Authentifizierungscode wird vorzugsweise mit vorkonfigurierten Authentifizierungscodes von zugelassenen Teilnehmern verglichen.

Bei den vorkonfigurierten Authentifizierungscodes kann es sich beispielsweise um eine Matrikelnummer oder eine Veranstaltungsteilnehmernummer handeln.

Bei einer möglichen Ausführungsform des erfindungsgemäßen Verfahrens werden die Content-Daten durch ein auf dem Zugriffspunkt implementiertes Content-Management-System in Abhängigkeit von der MAC-Adresse des mobilen Endgerätes generiert und an das mobile Endgerät übertragen.

Bei einer möglichen Ausführungsform des erfindungsgemäßen Verfahrens weisen die in Abhängigkeit von der MAC-Adresse des mobilen Endgerätes durch das Content-Management-System generierten Content-Daten einen Couponcode zum Bezug von Waren oder Dienstleistungen durch den Nutzer des mobilen Endgerätes in der lokalen Umgebung des Zugriffspunktes auf.

Bei einer möglichen Ausführungsform des erfindungsgemäßen Verfahrens werden die Content-Daten von einer Antenne des Zugriffspunktes mit einstellbarer Sendeleistung innerhalb einer Sendereichweite in einem vorgegebenen Bereich in der lokalen Umgebung des Zugriffspunktes an bei dem Zugriffspunkt angemeldete mobile Endgeräte übertragen.

Bei einer weiteren möglichen Ausführungsform des erfindungsgemäßen Verfahrens handelt es sich bei den an das mobile Endgerät übertragenen Content-Daten um Multimediadaten, welche insbesondere Textdaten, Bilddaten, Audiodaten, Videodaten, Chatdaten sowie Livestreaming-Echtzeitdaten umfassen.

Bei einer weiteren möglichen Ausführungsform des erfindungsgemäßen Verfahrens werden die Livestreaming-Echtzeitdaten von Sensoren in einem Veranstaltungsbereich eines Veranstaltungsortes aufgenommen und an den Datenspeicher des an dem Veranstaltungsort befindlichen Zugriffspunktes zur Bereitstellung an mobile Endgeräte in Echtzeit übermittelt. Bei den Sensoren kann es sich beispielsweise um Kameras oder Mikrofone handeln.

Bei einer weiteren möglichen Ausführungsform des erfindungsgemäßen Verfahrens wird eine momentane Position des Zugriffspunktes durch eine in dem Zugriffspunkt implementierte Detektionseinrichtung detektiert.

Bei einer möglichen Ausführungsform des erfindungsgemäßen Verfahrens werden die in dem Datenspeicher des Zugriffspunktes lokal gespeicherten Content-Daten in Abhängigkeit von der detektierten momentanen Position des Zugriffspunktes automatisch angepasst.

Bei einer weiteren möglichen Ausführungsform des erfindungsgemäßen Verfahrens werden die auf das mobile Endgerät des Nutzers übertragenen Echtzeitdaten auf dem Datenspeicher des Zugriffspunktes gespeichert, um einen späteren Zugriff durch das mobile Endgerät zu ermöglichen.

Bei einer weiteren möglichen Ausführungsform des erfindungsgemäßen Verfahrens wird die momentane Position des mobilen Endgerätes relativ zu der momentanen detektierten Position des Zugriffspunktes durch eine in dem Zugriffspunkt implementierte Detektionseinrichtung detektiert, wobei die in dem Datenspeicher des Zugriffspunktes lokal gespeicherten Content-Daten in Abhängigkeit von der momentaner Position des mobilen Endgerätes automatisch angepasst werden.

Bei einer weiteren möglichen Ausführungsform des erfindungsgemäßen Verfahrens trennt ein auf dem Zugriffspunkt implementiertes Nutzer-Verwaltungs-System auf eine Anfrage des mobilen Endgerätes hin die drahtlose Verbindung zu dem mobilen Endgerät und verhindert eine Verbindungsaufnahme des mobilen Endgerätes für eine vorgegebene Zeitspanne.

Bei einer weiteren möglichen Ausführungsform des erfindungsgemäßen Verfahrens wird eine Verbindungsaufnahme des mobilen Endgerätes zu dem Zugriffspunkt durch einen sofortigen Verbindungsabbruch seitens des Zugriffspunktes verhindert, falls die MAC-Adresse oder die IMEI des mobilen Endgerätes in einer auf dem Datenspeicher des Zugriffspunktes gespeicherten Liste von momentan zu blockierenden MAC-Adressen oder IMEI übereinstimmt.

Die Erfindung schafft ferner einen Zugriffspunkt zum Bereitstellen von lokal gespeicherten Content-Daten für ein mobiles Endgerät eines Nutzers mit den in Patentanspruch 14 angegebenen Merkmalen.

Bei einer möglichen Ausführungsform des erfindungsgemäßen Zugriffspunktes handelt es sich bei der drahtlosen Schnittstelle um eine IEEE 802.11-Schnittstelle.

Bei einer alternativen Ausführungsform des erfindungsgemäßen Zugriffspunktes handelt es sich bei der drahtlosen Schnittstelle um eine Bluetooth-Schnittstelle.

Bei einer weiteren möglichen Ausführungsform des erfindungsgemäßen Zugriffspunktes ist die drahtlose Schnittstelle eine GSM-Schnittstelle.

Bei einer weiteren möglichen Ausführungsform des erfindungsgemäßen Zugriffspunktes ist die drahtlose Schnittstelle eine GPRS-Schnittstelle.

Bei einer weiteren möglichen Ausführungsform des erfindungsgemäßen Zugriffspunktes ist die drahtlose Schnittstelle des Zugriffspunktes eine EDGE-Schnittstelle.

Bei einer weiteren möglichen Ausführungsform des erfindungsgemäßen Zugriffspunktes weist die drahtlose Schnittstelle eine UMTS-Schnittstelle auf.

Bei einer weiteren möglichen Ausführungsform des erfindungsgemäßen Zugriffspunktes handelt es sich bei der drahtlosen Schnittstelle um eine LTE-Schnittstelle.

Im Weiteren werden mögliche Ausführungsformen des erfindungsgemäßen Verfahrens und der erfindungsgemäßen Vorrichtung zum Bereitstellen von lokal gespeicherten Content-Daten für ein mobiles Endgerät eines Nutzers durch einen Zugriffspunkt unter Bezugnahme auf die beigefügten Figuren näher erläutert.

Es zeigen:
- Fig. 1: eine Anordnung mit einem herkömmlichen Zugriffspunkt nach dem Stand der Technik;
- Fig. 2: ein Blockschaltbild zur Darstellung eines Ausführungsbeispiels eines erfindungsgemäßen Zugriffspunktes;
- Fig. 3: ein Blockschaltbild zur Darstellung einer weiteren Ausführungsvariante eines erfindungsgemäßen Zugriffspunktes;
- Fig. 4: ein Diagramm zur Darstellung einer Softwareplattform bei einer möglichen Ausführungsform des erfindungsgemäßen Zugriffspunktes;
- Fig. 5: ein Signaldiagramm zur Erläuterung der Funktionsweise eines erfindungsgemäßen Zugriffspunktes;
- Fig. 6: ein Ablaufdiagramm zur Darstellung eines möglichen Ausführungsbeispiels des erfindungsgemäßen Verfahrens zum Bereitstellen von lokal gespeicherten Content-Daten für ein mobiles Endgerät eines Nutzers;
- Fig. 7: ein Signaldiagramm zur Darstellung des Aufbaus und Interaktion eines erfindungsgemäßen Zugriffspunktes mit einem mobilen Endgerät;
- Fig. 8: ein weiteres Ablaufdiagramm zur Darstellung der Funktionsweise einer Variante des erfindungsgemäßen Zugriffspunktes;
- Fig. 9: ein Signaldiagramm zur Darstellung eines LoginProzesses einer Ausführungsvariante des erfindungsgemäßen Verfahrens;
- Fig. 10: ein Signaldiagramm zur Erläuterung eines Redirection-Prozesses, der bei dem erfindungsgemäßen Verfahren verwendet werden kann;
- Fig. 11: ein Signaldiagramm zur Darstellung eines Authentifizierungsprozesses, der bei einer Ausführungsvariante des erfindungsgemäßen Verfahrens eingesetzt werden kann;
- Fig. 12: ein Signaldiagramm zur Darstellung einer Ausführungsvariante des erfindungsgemäßen Verfahrens bei dem Coupons bereitgestellt werden;
- Fig. 13: ein Blockdiagramm zur Darstellung einer weiteren Ausführungsvariante eines erfindungsgemäßen Zugriffspunktes;
- Fig. 14: ein Blockschaltbild zur Darstellung einer weiteren Ausführungsvariante eines erfindungsgemäßen Zugriffspunktes.

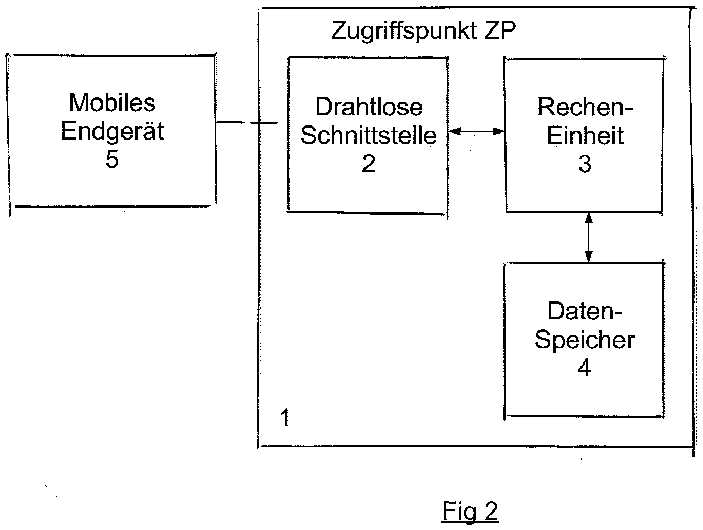

Wie man aus Fig. 2 erkennen kann, weist ein Zugriffspunkt 1 gemäß der Erfindung bei der dort dargestellten Ausführungsvariante mindestens eine drahtlose Schnittstelle 2, eine Recheneinheit 3 sowie einen lokalen Datenspeicher 4 auf. Ein mobiles Endgerät 5 verfügt über eine Funkverbindung bzw. drahtlose Verbindung zu der Schnittstelle bzw. dem Interface 2 des Zugriffspunktes 1. Der Zugriffspunkt 1 kann sich beispielsweise in einem Metall- oder Kunststoffgehäuse befinden, das beispielsweise eine Größe von 30 x 30 x 5 cm aufweist. Die Recheneinheit 3 des Zugriffspunktes bildet eine Computing-Plattform, die über mindestens einen Prozessor verfügt. Bei der drahtlosen Schnittstelle 2 handelt es sich bei einer Ausführungsform um eine 802.11 WLAN-Schnittstelle. Die drahtlose Schnittstelle 2 kann über eine externe Sende- und Empfangsantenne verfügen. Der Datenspeicher 4 kann durch ein Massenspeichermedium gebildet werden, beispielsweise durch eine SD-Karte oder durch eine über USB angebundene Festplatte. Der Zugriffspunkt 1 kann bei einer möglichen Ausführungsform über weitere Anschlüsse zum Anschluss weiterer austauschbarer Massenspeichermedien verfügen. Darüber hinaus können in dem Zugriffspunkt 1 weitere Einheiten vorgesehen sein, beispielsweise eine Stromversorgungseinheit.

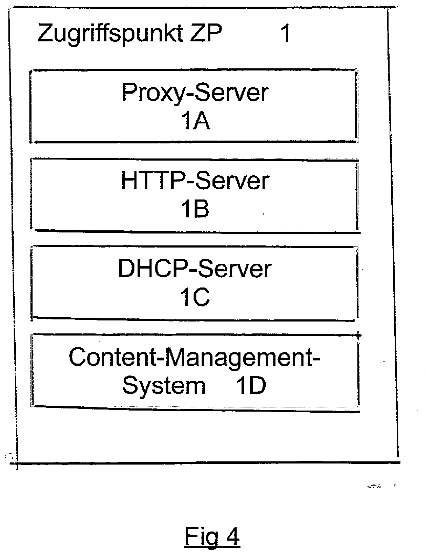

Bei dem erfindungsgemäßen Zugriffspunkt 1 ist auf der Recheneinheit 3 bzw. der Computing-Plattform ein Proxy-Server implementiert 1A. Fig. 4 zeigt schematisch eine mögliche Software- bzw. Computing-Platform. Erhält der Zugriffspunkt 1 über die drahtlose Schnittstelle 2 eine Browser-Anfrage von dem mobilen Endgerät 5, wird der auf der Recheneinheit 3 implementierte Proxy-Server 1A eine URL-Adresse, die in der empfangenen Browser-Anfrage enthalten ist, durch eine vorkonfigurierte URL-Adresse ersetzt, die einen Speicherort von in dem Datenspeicher 4 des Zugriffspunktes 1 lokal gespeicherten Content-Daten angibt. Die ursprüngliche URL-Adresse wird in einem dafür vorgesehenen Zwischenspeicher gespeichert. Der Zwischenspeicher kann in der Recheneinheit 3 integriert sein. Diese Content-Daten werden aus dem Datenspeicher 4 durch die Recheneinheit 3 ausgelesen und an das mobile Endgerät 5 über die drahtlose Schnittstelle 2 übertragen, nachdem die vorkonfigurierte URL-Adresse in den gesamten ausgelesenen Content-Daten durch den Proxy-Server 1A durch die in der Browser-Anfrage des mobilen Endgerätes 5 ursprünglich enthaltene URL-Adresse zurückersetzt worden ist. Hierzu wird die ursprüngliche URL-Adresse aus dem Zwischenspeicher ausgelesen. Die Bereitstellung der Content-Daten erfolgt bei dem erfindungsgemäßen Zugriffspunkt 1 in autonomer Weise, ohne dass der Zugriffspunkt 1 an ein Netzwerk, insbesondere das Internet, angeschlossen sein muss. Der auf der Recheneinheit 3 implementierte Proxy-Server 1A führt ein Ersetzen und Zurück-Ersetzen von URL-Adressen durch, was zur Anzeige der auf dem Datenspeicher 4 lokal gespeicherten Content-Daten führt, wodurch eine Redirection auf eine andere URL-Adresse nicht notwendig ist und somit die Menge der übertragenen Daten reduziert werden kann. Auf diese Weise kann ein Nutzer des mobilen Endgerätes 5 sich nur innerhalb der auf dem Zugriffspunkt bzw. dem Hostsystem gespeicherten Webseiten mithilfe seines Browsers bewegen. Bei einer möglichen Ausführungsform des Zugriffspunktes 1 sind alle für den Nutzer zugänglichen Informationen bzw. Content-Daten lokal auf dem Zugriffspunkt 1 gespeichert und werden dort verarbeitet. Aufgrund des durch den Proxy-Server 1A durchgeführten Redirection-Verfahrens kann der Nutzer des mobilen Endgerätes 5 seinen auf dem mobilen Endgerät 5 installierten Browser verwenden, ohne dass zusätzliche Software auf dem mobilen Endgerät 5 installiert werden muss. Das Nutzerinterface ist browserbasiert, sodass jedes mobile Endgerät 5 genutzt werden kann, um Content-Daten bzw. Inhalte abzurufen. Es werden daher von dem erfindungsgemäßen Zugriffspunkt 1 keine speziellen Anforderungen an das mobile Endgerät 5 gestellt. Die auf dem Datenspeicher 4 abgelegten Content-Daten können für die Navigation über mobile Endgeräte 5, wie beispielsweise Smartphones, optimiert und in dafür geeigneten Darstellungsformaten abgelegt sein. Die Datenformate und Datengrößen für die Wiedergabe und nonvolatile Speicherung der Content-Daten auf dem mobilen Endgerät 5 können entsprechend optimiert werden.

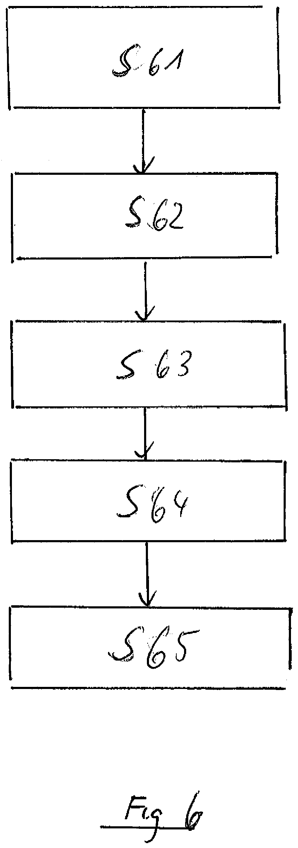

Der in Fig. 2 dargestellte Zugriffspunkt 1 führt ein Verfahren zum Bereitstellen von lokal gespeicherten Content-Daten für das mobile Endgerät 5 durch. Ein Ausführungsbeispiel für ein derartiges Verfahren ist in dem Ablaufdiagramm gemäß Fig. 6 dargestellt. Demnach empfängt der Zugriffspunkt 1 in einem ersten Schritt S61 von dem mobilen Endgerät 5 eine Browser-Anfrage über die drahtlose Schnittstelle 2. Diese Browser-Anfrage enthält eine URL-Adresse zum Zugriff auf einen Server, insbesondere Webserver.

In einem weiteren Schritt S62 wird durch die Recheneinheit 3 des Zugriffspunktes 1 die in der erhaltenen Browser-Anfrage enthaltene URL-Adresse des Servers durch eine vorkonfigurierte URL-Adresse durch einen auf der Recheneinheit 3 des Zugriffspunktes 1 implementierten Proxy-Server 1A ersetzt. Diese vorkonfigurierte URL-Adresse gibt einen Speicherort von in dem Datenspeicher 4 des Zugriffspunktes 1 lokal gespeicherten Content-Daten an.

In einem weiteren Schritt S63 liest die Recheneinheit 3 des Zugriffspunktes 1 die durch die ersetzte vorkonfigurierte URL-Adresse adressierten Content-Daten aus dem Datenspeicher 4 des Zugriffspunktes 1 aus.

In einem weiteren Schritt S64 erfolgt durch die Recheneinheit 3 ein Zurück-Ersetzen der vorkonfigurierten URL-Adresse in den gesamten ausgelesenen Content-Daten durch die in der Browser-Anfrage des mobilen Endgerätes 5 ursprünglich enthaltene URL-Adresse mithilfe des auf der Recheneinheit 3 des Zugriffspunktes 1 implementierten Proxy-Servers 1A.

Anschließend werden im Schritt S65 die aus dem Datenspeicher 4 des Zugriffspunktes auf die Recheneinheit 3 ausgelesenen Content-Daten von dem Zugriffspunkt 1 über die drahtlose Schnittstelle 2 an das mobile Endgerät 5 des Nutzers als Antwort auf die von dem mobilen Endgerät 5 durch den Zugriffspunkt 1 empfangene Browser-Anfrage übertragen. Diese Antwort enthält die von dem Proxy-Server 1A zurückersetzten URL-Adressen.

Bei einer möglichen Ausführungsvariante des erfindungsgemäßen Verfahrens, wie es in Fig. 6 dargestellt ist, erfolgt das Bereitstellen der lokal gespeicherten Content-Daten durch den Zugriffspunkt 1, ohne dass sich der Nutzer eines mobilen Endgerätes 5 dafür anmelden muss, sobald das mobile Endgerät in den lokalen Bereich des Zugriffspunktes 1 eintritt, d.h. innerhalb der Sendereichweite von dessen drahtloser Schnittstelle 2. In einer alternativen Ausführungsform erfolgt eine Anmeldung des mobilen Endgerätes 5 in einem passwortgeschützten oder passwortlosen Login-Prozess. Dabei wird dem mobilen Endgerät 5 bei dessen Anmeldung an dem Zugriffspunkt 1 durch einen auf den Zugriffspunkt 1 implementierten DHCP-Server 1C eine freie IP-Adresse aus einer vorkonfigurierten Gruppe von freien IP-Adressen als Client-IP-Adresse zugewiesen. Nach Abmeldung des mobilen Endgerätes 5 von dem Zugriffspunkt 1 wird die Client-IP-Adresse in die Gruppe von freien IP-Adressen zurückgegeben bzw. zurückgeschrieben. Die MAC-Adresse oder IMEI des mobilen Endgerätes 5 wird vorzugsweise der zugewiesenen Client-IP-Adresse zugeordnet. Auf eine DNS-Browser-Anfrage des mobilen Endgerätes 5 hin sendet ein auf dem Zugriffspunkt 1 implementierter DNS-Server eine vorkonfigurierte IP-Adresse des Zugriffspunktes an den Browser des mobilen Endgerätes 5.

Bei einer möglichen Ausführungsform des erfindungsgemäßen Verfahrens werden die aus dem Datenspeicher 4 ausgelesenen lokal gespeicherten Content-Daten an das mobile Endgerät 5 des Nutzers nur dann übertragen, nachdem sich der Nutzer für die jeweiligen Content-Daten als empfangsberechtigt gegenüber dem Zugriffspunkt 1 authentifiziert hat. Zur Authentifizierung des Nutzers kann das mobile Endgerät 5 des Nutzers bei einer möglichen Ausführungsvariante einen Authentifizierungscode an den Zugriffspunkt 1 senden. Dieser über die drahtlose Schnittstelle 2 des Zugriffspunktes 1 empfangene Authentifizierungscode wird anschließend mit vorkonfigurierten Authentifizierungscodes von zugelassenen Teilnehmern verglichen. Bei dem Authentifizierungscode kann es sich beispielsweise um eine Matrikelnummer eines Nutzers, beispielsweise eines Studenten, handeln, der beispielsweise bei einer Vorlesung ein Vorlesungsskript von einem im Vorlesungssaal aufgestellten Zugriffspunkt 1 herunterladen möchte. Weiterhin kann es sich bei dem Authentifizierungscode um eine beliebige Veranstaltungsteilnehmernummer handeln, die ein Teilnehmer der Veranstaltung, beispielsweise ein Kongressteilnehmer, von dem Veranstalter des Kongresses erhält. Mit dem erfindungsgemäßen Verfahren ist es somit möglich, Content-Daten einer vorgegebenen Gruppe von Personen bzw. Nutzern zur Verfügung zu stellen und andere nicht authentifizierte Nutzer vom Erhalt der Content-Daten auszuschließen. Bei einer möglichen Ausführungsvariante ist zusätzlich abgespeichert, welche Nutzer bestimmte Content-Daten aus dem Datenspeicher 4 des Zugriffspunktes 1 bezogen haben.

Bei einer möglichen Ausführungsform des erfindungsgemäßen Zugriffspunktes 1 werden die Content-Daten durch ein auf dem Zugriffspunkt 1 implementiertes Content-Management-System 1D generiert. Das Generieren der Content-Daten durch das Content-Management-System 1D kann bei einer möglichen Ausführungsform in Abhängigkeit von der MAC-Adresse des mobilen Endgerätes 5 erfolgen. Die in Abhängigkeit von der MAC-Adresse des mobilen Endgerätes 5 durch das Content-Management-System 1D des Zugriffspunktes 1 generierten Content-Daten können bei einer Ausführungsvariante einen Couponcode aufweisen, die es dem Nutzer des mobilen Endgerätes 5 erlauben, Waren oder Dienstleistungen in der lokalen Umgebung des Zugriffspunktes 1 zu beziehen. Diese Waren und Dienstleistungen werden beispielsweise durch den Betreiber des Zugriffspunktes 1 bereitgestellt. Ein übertragener Couponcode kann beispielsweise auf einer Anzeige des mobilen Endgerätes 5 angezeigt werden und einem Angestellten des Zugriffspunktbetreibers zur manuellen Sichtung vorgelegt werden. Weiterhin kann das Einlösen der Coupons auch mithilfe eines an dem Zugriffspunkt 1 aufgestellten Scanners des Zugriffspunktbetreibers erfolgen. Weiterhin ist es beispielsweise möglich, dass es sich bei dem Couponcode um einen Audiocode handelt, der von einem Lautsprecher des mobilen Endgerätes 5 an ein Einlösegerät übertragen wird, das über ein entsprechendes Mikrofon zur Aufnahme des Audiocodes verfügt.

Die von dem erfindungsgemäßen Zugriffspunkt 1 bereitgestellten Content-Daten werden bei einer möglichen Ausführungsform von einer Antenne des Zugriffspunktes 1 mit einstellbarer Sendeleistung innerhalb einer Sendereichweite in einem vorgegebenen Bereich in der lokalen Umgebung des Zugriffspunktes 1 an bei dem Zugriffspunkt 1 angemeldete mobile Endgeräte 5 übertragen. Beispielsweise werden die Content-Daten an mobile Endgeräte 5 übertragen, die sich innerhalb einer Reichweite von von dem Standort des Zugriffspunktes 1 befinden, die durch die im Zugriffspunkt implementierte drahtlose Schnittstelle und deren Konfiguration bestimmt wird. Ein Zugriff auf die Content-Daten von einem weiter entfernten Ort ist nicht möglich, d.h. die gespeicherten übertragenen Content-Daten stehen stets in einem direkten Zusammenhang mit der jeweiligen Umgebung des Zugriffspunktes 1. Der erfindungsgemäße Zugriffspunkt 1 ist somit für eine stationäre Benutzung bzw. ein stationäres Herunterladen von lokal verfügbaren Content-Daten ausgelegt. Das auf dem Zugriffspunkt 1 implementierte Content-Management-System 1D erlaubt eine einfache Editierung der Content-Daten durch den Betreiber des Zugriffspunktes 1. Hierzu kann der Zugriffspunkt 1 bei einer möglichen Ausführungsvariante über eine spezielle Schnittstelle zur Editierung der Content-Daten verfügen. Da die lokal gespeicherten Content-Daten direkt von dem Zugriffspunkt 1 in das anfragende mobile Endgerät 5 über die drahtlose Schnittstelle übertragen werden, können die Content-Daten mit einer sehr hohen Datenübertragungsgeschwindigkeit an das mobile Endgerät 5 bzw. dem Client übertragen werden. Die Übertragungsgeschwindigkeit kann dabei 1 Gbit/s erreichen.

Bei einer möglichen Ausführungsvariante ist es möglich, dass sich mehrere Nutzer mithilfe ihres mobilen Endgerätes 5 bei dem Zugriffspunkt 1 gleichzeitig einloggen bzw. anmelden und über eine interaktive Kommunikationsplattform lokal Daten miteinander austauschen. Bei diesem Datenaustausch können die auf dem Datenspeicher 4 lokal gespeicherten Content-Daten miteingebunden werden. Das auf dem Zugriffspunkt 1 implementierte Content-Management-System 1D kann durch einen Administrator editiert werden. Zudem kann der Administrator eine Gruppe von zugangsberechtigten Nutzern festlegen bzw. definieren. Nach Einwahl eines Nutzers kann ein Authentifizierungsprozess durchgeführt werden und nach erfolgreicher Authentifizierung können die für die genutzten Dienste erforderlichen Daten, die Dauer einer Sitzung oder die Anzahl der übertragenen Daten, ermittelt und gespeichert werden.

Bei einer möglichen Ausführungsform kanndie Recheneinheit 3 neben einem Lesezugriff auch einen Schreibzugriff auf dem Datenspeicher 4 durchführen. Bei einer möglichen Ausführungsvariante hat die Recheneinheit 3 bzw. die Computing-Plattform Zugriff auf mehrere unterschiedliche Massendatenspeicher 4 desselben oder unterschiedlichen Typs. Bei dem Datenspeicher 4 kann es sich beispielsweise um Secure-Digital-Speicherkarten, sogenannte SD-Karten, USB-Sticks, Solid State Drives SSD oder Hard Disk Drives HDD handeln. Dieses Massenspeichermedium 4 kann über standardisierte Protokolle an die Computing-Plattform bzw. die Recheneinheit 3 angebunden sein. Eine weitere Option ist ein über ein lokales Netzwerk angebundener Speicher sogenannter Network Attached Storage NAS-Speicher.

Die drahtlose Schnittstelle 2 des Zugriffspunktes 1 verfügt über eine Antenne, die bei einer möglichen Ausführungsvariante auch austauschbar sein kann. Bei der Antenne 1 kann es sich um eine omnidirektionale Antenne handeln. Diese kann bis zu einigen 10 Metern entfernt von der Hardware des Zugriffspunktes 1 entfernt platziert werden und ggf. über eine eigene Stromversorgungseinheit verfügen. Weiterhin kann es sich bei der Antenne um eine direktionale Antenne handeln, mit der es möglich ist, einen Bereich, in dem ein Funksignal eine signifikante Stärke aufweist, gezielt einzuschränken. Dies verringert zusätzliche sich negativ auswirkende Interaktionen mit anderen Netzwerken desselben Frequenzbereiches, deren Sendeeinrichtungen sich in der Nähe des erfindungsgemäßen Zugriffspunktes 1 befinden. Bei einer möglichen Ausführungsvariante können mehrere gleichartige oder verschiedene Antennen bei der drahtlosen Schnittstelle 2 des Zugriffspunktes 1 vorgesehen werden. Zudem ist es bei einer möglichen Ausführungsvariante möglich, die Sendeleistung des ausgestrahlten Signals einzustellen. Bei der Übertragung der Content-Daten an das mobile Endgerät 5 erhält das mobile Endgerät bei einer möglichen Ausführungsvariante bei der Antwort auf die Browser-Anfrage zusätzlich eine Mitteilung, welche den Nutzer des mobilen Endgerätes 5 darüber informiert, dass die in der Antwort enthaltenen Content-Daten von einer durch den Zugriffspunkt 1 ersetzten URL-Adresse und nicht von der in der Browser-Anfrage ursprünglich enthaltenen URL-Adresse stammen. Diese Mitteilung wird in dem Browser des mobilen Endgerätes 5 für den Nutzer sichtbar auf einer Anzeige des mobilen Endgerätes 5 angezeigt.

Bei einer möglichen Ausführungsform des erfindungsgemäßen Verfahrens kann der Zugriffspunkt 1 derart konfiguriert sein, dass dieser einen offenen Zugangspunkt darstellt, an dem sich jedes mobile Enderät 5 einloggen kann, das mit der verwendeten drahtlosen Technologie kompatibel ist, ohne dass ein Passwort oder dergleichen eingegeben werden muss. Sobald sich das mobile Endgerät bzw. das Clientgerät erfolgreich bei dem Zugriffspunkt 1 angemeldet hat, weist der Zugriffspunkt 1 dem mobilen Endgerät bzw. Client 5 eine IP-Adresse unter Verwendung eines DHCP-Server-Prozesses zu, der durch die Recheneinheit 3 des Zugriffspunktes 1 ausgeführt wird. Diese IP-Adresse ist für die Kommunikation zwischen dem Zugriffspunkt 1 und dem mobilen Endgerät 5 erforderlich und so lange gültig, bis die Kommunikation beendet wird. Dies kann beispielsweise dadurch geschehen, dass sich das mobile Endgerät 5 des Nutzers zu weit von der Antenne der drahtlosen Schnittstelle 2 des Zugriffspunktes 1 entfernt.

Nach erfolgreicher Zuweisung der IP-Adresse ist das mobile Endgerät 5 in der Lage auf die Content-Daten des Zugriffspunktes 1 zuzugreifen. Für den Zugriff auf die Informationen bzw. Content-Daten, die in dem Datenspeicher 4 des Zugriffspunktes 1 abgespeichert sind, kann der Nutzer seinen bevorzugten Browser einsetzen. Nach Art des Browsers kann der Nutzer auf eine beliebige Webpage zugreifen. Einige Browser öffnen automatisch eine Standardhomepage und andere können den Nutzer dazu anhalten, eine beliebige Seite oder Domainnamen einzutippen. Sobald der Nutzer einen Seitennamen einer Webseite eingegeben hat, muss der Client-Browser des mobilen Endgeräts den eingegebenen Hostnamen, beispielsweise www.epo.org, in eine IP-Adresse auflösen, indem er das standardisierte DNS-Protokoll verwendet. Daher sendet der Browser des mobilen Endgerätes bzw. des Clients einen DNS-Request über die drahtlose Schnittstelle 2 an dem Zugriffspunkt 1, um eine IP-Adresse für die URL-Adresse zu erhalten, die der Nutzer eingegeben hat. Bei herkömmlichen Systemen ist ein DNS-Server derart ausgelegt, dass er einen unbekannten Domainnamen auflöst, indem er eine entsprechende Anfrage an andere DNS-Server stellt, die über die Information hinsichtlich der IP-Adresse der angefragten URL-Adresse verfügen. Spezifische DNS-Server sind herkömmlicherweise spezifischen Top-Level-Domains, wie beispielsweise .de, .net oder .com zugewiesen. Daher kann ein DNS-Server herkömmlicherweise bei diesen DNS-Servern nachfragen, um unbekannte Domainnamen in IP-Adressen aufzulösen. Bei dem erfindungsgemäßen Zugriffspunkt 1 handelt es sich jedoch um ein autonomes System, mit dem ein auf dem Zugriffspunkt 1 implementierter DNS-Server nicht notwendigerweise die Möglichkeit hat, über eine Datenverbindung, beispielsweise eine Internet-Verbindung, entsprechende Anfragen an weitere DNS-Server zu senden. Bei dem erfindungsgemäßen Zugriffspunkt 1 wird unabhängig davon, welche URL-Adresse der Nutzer in sein mobiles Endgerät 5 eingegeben hat, stets die dynamisch generierte Seite bzw. Content-Daten bereitgestellt, die sich in dem lokalen Datenspeicher 4 befindet. Der auf dem Zugriffspunkt 1 implementierte DHCP-Server wird vorzugsweise derart konfiguriert, dass er die IP-Adresse des Zugriffspunktes 1 zurücksendet, unabhängig davon, welcher Hostname durch das mobile Endgerät 5 angefordert worden ist. Falls beispielsweise der Browser des mobilen Endgerätes 5 die Domainadresse "www.epo.org" in einer konventionellen Internetumgebung anfragt, wird ein entsprechend konfigurierter herkömmlicher DNS-Server beispielsweise die IP-Adresse "217.227.229.55" als IP-Adresse der angefragten Domainadresse zurückgeben. Falls jedoch die gleiche DNS-Anfrage von dem mobilen Endgerät 5 nach Verbindung mit dem Zugriffspunkt 1 gesendet wird, liefert der auf dem Zugriffspunkt 1 implementierte DNS-Server beispielsweise die IP-Adresse 10.1.0.1 als IP-Adresse des Zugriffspunktes 1 innerhalb des lokalen drahtlosen Netzwerkes. Sobald der Hostname, den der Nutzer in dem Browser seines mobilen Endgerätes 5 eingegeben hat und die IP-Adresse unter Verwendung des DNS-Servers aufgelöst worden ist, sendet der Browser des mobilen Endgerätes 5 beispielsweise einen HTTP-Request an die aufgelöste IP-Adresse. Der Browser sendet den HTTP-Request über die drahtlose Schnittstelle an einen auf der Recheneinheit 3 des Zugriffspunktes implementierten HTTP-Server 1B. Unabhängig von der URL-Adresse oder Anfrage, gibt der HTTP-Server 1B eine HTTP-Antwort zurück, der dynamisch durch das Content Management System generierten Inhalt enthält sowie, falls die angefragte Domain der HTTP-Anfrage nicht mit einer vorkonfigurierten Domain übereinstimmt, eine für den Nutzer des mobilen Endgeräts sichtbare Nachricht enthält, die den Nutzer darüber informiert, dass er über den Zugriffspunkt nicht auf das Internet zugreifen kann, sondern in jedem Fall die auf dem Zugriffspunkt lokal gespeicherte Seite angezeigt erhält. Sobald der Nutzer des mobilen Endgerätes 5 eine beliebige Internetadresse wie beispielsweise www.isarpatent.de in seinen Browser eingibt, werden alle DNS- und HTTP-Anfragen im Hintergrund verarbeitet, ohne dass eine weitere Interaktion seitens des Nutzers des mobilen Endgerätes erforderlich ist. Der dynamisch generierte Content bzw. Inhalt wird dem Nutzer auf dem Display des mobilen Endgerätes 5 angezeigt.

Bei einer möglichen Ausführungsform kann eine Content-Management-Software eingesetzt werden, um die Content-Daten zu generieren und nutzerfreundlich zu editieren. Einige Content-Management-Systeme, insbesondere diejenigen, die für berührungsempfindliche Vorrichtungen optimiert sind, verwenden Dateien wie clientseitige JavaScript-Bibliotheken oder Bilder.. DieseDateien können bei einem öffentlichen Internetserver gehostet bzw. abgelegt sein. Ohne besondere Konfiguration wird ein auf dem Zugriffspunkt 1 implementierter Server bei einem Zugriffsversuch auf eine Datei, die auf einem nur über das Internet erreichbaren Server gespeichert ist, eine Fehlermeldung statt des erwarteten Inhalts zurückgeben, sofern er eben diesen Server nicht erreichen kann, und dadurch die ordnungsgemäße Funktion des Content-Management-Systems stören. Um dieses Problem zu beseitigen, ist der erfindungsgemä-βe Zugriffspunkt 1 bei einer möglichen Ausführungsform in der Lage, während einer temporär oder permanent bestehenden Verbindung zu eben diesem Server lokale Kopien der auf diesem Server gespeicherten Dateien auf dem internen Datenspeicher 4 des Zugriffspunktes anzulegen sowie durch das Verfahren des Ersetzens und des Zurück-Ersetzens durch den im Zugriffspunkt implementierten Proxy-Server die vom Browser des mobilen Endgerätes 5 gesendeten HTTP-Anfragen derart zu verändern, dass der auf dem Zugriffspunkt 1 implementierte Webserver die lokal gespeicherten Kopien zurückgibt Auf diese Weise ist der Browser des Clients bzw. mobilen Endgerätes 5 in der Lage, die Dateien ohne Nutzerinteraktion zu laden. Dieses Verfahren ist für das mobile Endgerät 5 transparent, sodass bei einer entsprechenden Ausführungsform des Zugriffspunktes 1 keine Möglichkeit besteht, die Anwesenheit des Proxy-Servers zu detektieren.

Die auf dem Datenspeicher 4 abgelegten Content-Daten können Daten unterschiedlichster Formate umfassen. Bei den Content-Daten kann es sich beispielsweise um Multimediadaten handeln, insbesondere Textdaten, Bilddaten, Audiodaten, Videodaten. Weiterhin ist es möglich, dass es sich bei den Content-Daten um Chatdaten oder Livestreaming-Echtzeitdaten handelt. Diese Livestreaming-Echtzeitdaten können beispielsweise von Sensoren stammen, die an einem Veranstaltungsort aufgestellt sind. Diese Sensoren sind beispielsweise Bildkameras oder Mikrofone. Die Livestreaming-Echtzeitdaten werden von den Sensoren in einem Veranstaltungsbereich eines Veranstaltungsortes aufgenommen und an den Datenspeicher 4 des an dem Veranstaltungsort befindlichen Zugriffspunktes 1 zur Bereitstellung an mobile Endgeräte 5 in Echtzeit übermittelt. Bei einer möglichen Ausführungsvariante sind diese Sensoren über eine eigene Schnittstelle direkt an den Zugriffspunkt 1 angeschlossen. Alternativ können die Übertragung der Echtzeitdaten von den Sensoren über eine Datennetzwerkschnittstelle des Zugriffspunktes 1 erfolgen. Bei dem Veranstaltungsort kann es sich beispielsweise um ein Fußballstadion handeln, in dem Kameras das Spielgeschehen aufzeichnen. Der Nutzer hat dann die Möglichkeit, über sein mobiles Endgerät 5, beispielsweise sein Smartphone, das Spielgeschehen zusätzlich auf dem Display des mobilen Endgerätes 5 anzuschauen, insbesondere bei verstellter direkter Sicht auf das Spielfeld. Bei einer möglichen Ausführungsvariante hat der Nutzer zusätzlich die Möglichkeit, eine Auswahl zwischen verschiedenen Livestreaming-Echtzeitdatenströmen, die von verschiedenen Sensoren stammen, zu treffen, beispielsweise um besondere Bereiche des Spielfeldes auf seinem mobilen Endgerät 5 angezeigt zu bekommen.

Bei dem in Fig. 2 dargestellten Ausführungsbeispiel handelt es sich bei dem Zugriffspunkt 1 um ein vollständig autonomes System, das über keine Netzwerkschnittstelle zu einem Datennetzwerk verfügt.

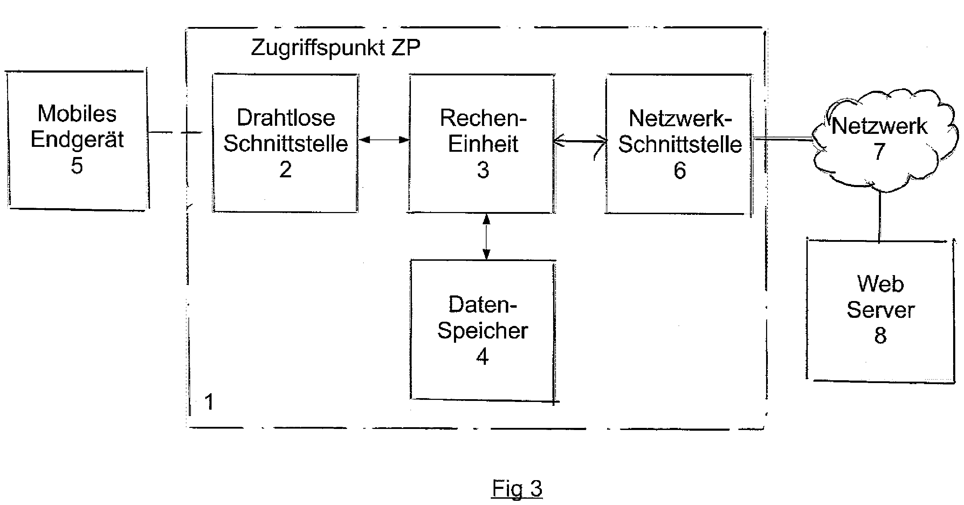

Bei der in Fig. 3 dargestellten Ausführungsvariante verfügt der Zugriffspunkt 1 zusätzlich über mindestens eine Netzwerkschnittstelle 6 zur Anbindung an ein Datennetzwerk 7. Bei dem Datennetzwerk kann es sich um ein firmeninternes Intranet oder beispielsweise das Internet handeln. An dem Datennetzwerk 7 können ein oder mehrere Server 8 angeschlossen sein.

Fig. 4 zeigt schematisch eine auf dem Zugriffspunkt 1 implementierte Softwareplattform. Wie aus Fig. 4 erkennbar, verfügt der Zugriffspunkt 1 über einen Proxy-Server 1A. Dieser Proxy-Server 1A ersetzt eine URL-Adresse, welche in einer von dem mobilen Endgerät 5 über die drahtlose Schnittstelle 2 empfangenen Browser-Anfrage enthalten ist, durch eine vorkonfigurierte URL-Adresse, die den Speicherort der in dem Datenspeicher 4 des Zugriffspunktes 1 lokal gespeicherten Content-Daten angibt. Vor der Ausgabe der adressierten Content-Daten, welche durch die ersetzte vorkonfigurierte URL-Adresse adressiert werden, führt der Proxy-Server 1A des Zugriffspunktes 1 eine Rück- bzw. Zurück-Ersetzung der vorkonfigurierten URL-Adresse in den gesamten ausgelesenen Content-Daten durch die in der Browser-Anfrage des mobilen Endgerätes 5 ursprünglich enthaltenen URL-Adresse durch, welche in einem Zwischenspeicher abgelegt ist.

Darüber hinaus verfügt der Zugriffspunkt 1 vorzugsweise über einen HTTP-Server 1B, um Inhalte über das HTTP-Protokoll verfügbar zu machen. Weiterhin verfügt der Zugriffspunkt über einen implementierten DHCP-Server 1C. Nach Anmeldung des mobilen Endgerätes 5 bei einem Zugriffspunkt 1 wird durch den auf dem Zugriffspunkt 1 implementierten DHCP-Server 1C eine freie IP-Adresse aus einer vorkonfigurierten Gruppe von freien IP-Adressen als Client-IP-Adresse zugewiesen. Diese Client-IP-Adresse wird nach Abmeldung des mobilen Endgerätes 5 von dem Zugriffspunkt 1 in die Gruppe der freien IP-Adressen zurückgegeben bzw. zurückgeschrieben. Darüber hinaus ist auf dem Zugriffspunkt 1 ein Content-Management-System 1D implementiert, welches ein Editieren der gespeicherten Content-Daten ermöglicht.

Die Softwareplattform des Zugriffspunktes 1 kann weitere Komponenten beinhalten, beispielsweise eine Datenbanksoftware zur persistenten Speicherung, Verwaltung und Analyse der gespeicherten und heruntergeladenen Content-Daten. Weiterhin kann die Softwareplattform des Zugriffspunktes 1 eine Software aufweisen, die aus eindeutigen Merkmalen des Client-Gerätes 5, beispielsweise dessen MAC-Adresse oder IMEI einen Coupon generiert, sodass das mobile Endgerät 5 bei Einlösung dieses Coupons eindeutig identifiziert werden kann.

Bei einer möglichen Ausführungsvariante kann der erfindungsgemäße Zugriffspunkt 1 ferner über eine Software verfügen, die eine Fernwartung des Zugriffspunktes 1 erlaubt. Eine auf dem Zugriffspunkt 1 implementierte Software versucht dabei, beispielsweise periodisch eine verschlüsselte Verbindung zu einem zentralen Server aufzubauen, sodass ein Administrator darauf zugreifen kann. Falls der Zugriffspunkt 1 von dem Datennetzwerk, beispielsweise dem Internet, getrennt ist, schlägt dieser Verbindungsversuch fehl. Der Zugriffspunkt 1 versucht in diesem Falle vorzugsweise nach Ablauf einer vorkonfigurierten Zeit automatisch einen erneuten Verbindungsaufbau zu dem zentralen Fernwartungsserver. Sobald die Verbindung zwischen dem Zugriffspunkt 1 und dem Fernwartungsserver aufgebaut ist, versucht der Zugriffspunkt die Datenverbindung so lange wie möglich aufrechtzuerhalten, sodass die Fernwartung des Zugriffspunktes 1 erfolgreich abgeschlossen werden kann.

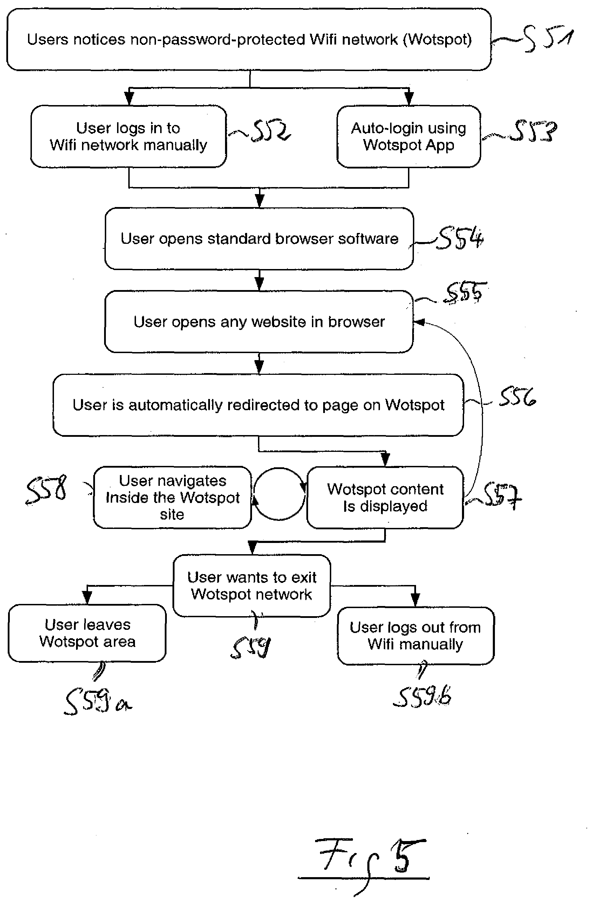

Fig. 5 zeigt ein Ablaufdiagramm zur Darstellung einer möglichen Ausführungsform des erfindungsgemäßen Verfahrens aus Sicht des Nutzers des mobilen Endgerätes 5.

In einem ersten Schritt S51 erkennt das mobile Endgerät 5 des Nutzers ein nicht passwortgeschütztes WiFi- bzw. WLAN-Netzwerk des Zugriffspunktes 1.

Danach besteht für den Nutzer die Möglichkeit, sich bei dem Netzwerk in Schritt S52 manuell einzuloggen bzw. anzumelden. Alternativ kann in Schritt S53 ein automatischer Login bei dem Zugriffspunkt 1 durch ein auf dem mobilen Endgerät 5 installiertes Applikationsprogramm durchgeführt werden. In einem weiteren Schritt S54 öffnet der Nutzer eine Standardbrowsersoftware, die auf seinem mobilen Endgerät 5 installiert ist. Daraufhin kann der Nutzer eine beliebige Webseite in Schritt S55 in dem geöffneten Browser aufrufen. Mithilfe des auf dem Zugriffspunkt 1 implementierten Proxy-Servers 1A wird die Anfrage des Nutzers automatisch auf eine in dem Datenspeicher 4 des Zugriffspunktes 1 gespeicherte Seite in Schritt S56 umgeleitet. Deren Inhaltsdaten werden in Schritt S57 beim Übertragen auf das mobile Endgerät 5 auf der Anzeige des mobilen Endgerätes 5 dem jeweiligen Nutzer angezeigt. Der Nutzer hat anschließend in Schritt S58 die Möglichkeit, innerhalb der angezeigten Website zu navigieren. Möchte der Nutzer in Schritt S59 das lokale Netzwerk des Zugriffspunktes 1 verlassen, hat er die Möglichkeit, einfach den lokalen Bereich des Netzwerkes mit seinem mobilen Endgerät in Schritt S59A zu verlassen oder sich in Schritt S59B aus dem drahtlosen Netzwerk manuell auszuloggen bzw. davon abzumelden.

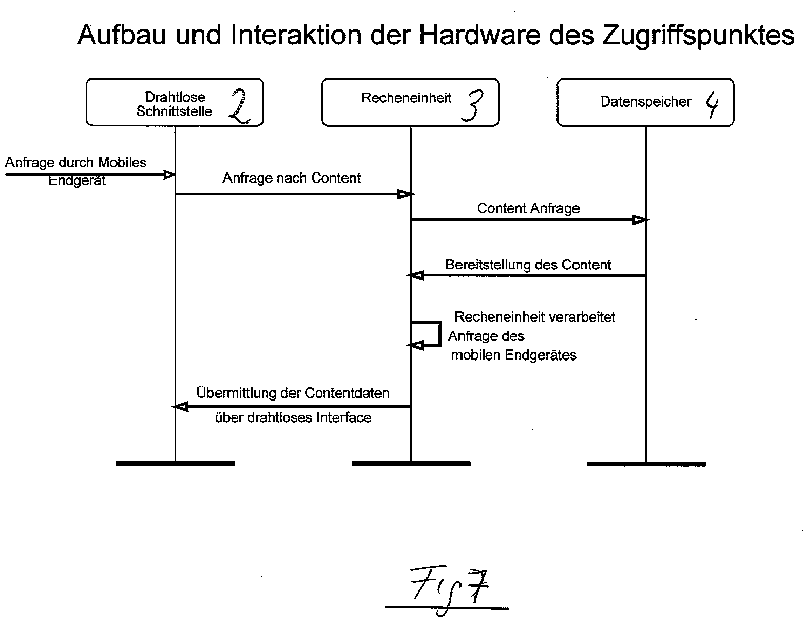

Fig. 7 zeigt den Aufbau und die Interaktion zwischen verschiedenen Hardwareeinheiten innerhalb des Zugriffspunktes 1. Wie man aus dem in Fig. 7 dargestellten Signaldiagramm erkennen kann, erhält der Zugriffspunkt 1 über seine drahtlose Schnittstelle 2 eine Anfrage von dem mobilen Endgerät 5 des Nutzers. Diese Anfrage zur Bereitstellung von Content-Daten wird intern an die Recheneinheit 3 des Zugriffspunktes 1 weitergeleitet. Nach erfolgter Ersetzung der Anfrage durch den auf dem Zugriffspunkt 1 implementierten Proxy-Server liest die Recheneinheit 3 Content-Daten aus dem lokalen Datenspeicher 4 des Zugriffspunktes 1 aus. Die aus dem Datenspeicher 4 ausgelesenen bzw. bereitgestellten Content-Daten werden anschließend intern in der Recheneinheit 3 entsprechend der Anfrage des mobilen Endgerätes verarbeitet bzw. aufbereitet. Die aufbereiteten Content-Daten werden intern an die drahtlose Schnittstelle 2 des Zugriffspunktes 1 übertragen und von dort mithilfe der Sendeantenne an das mobile Endgerät 5 drahtlos übertragen, nachdem die Zurückersetzung durch den auf dem Zugriffspunkt 1 implementierten Proxy-Server stattgefunden hat.

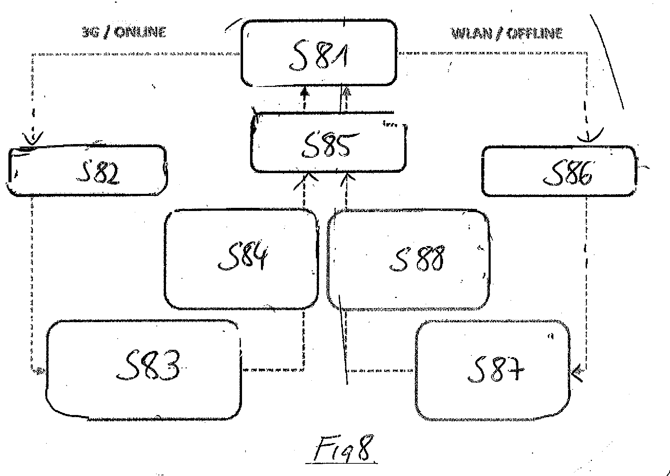

Fig. 8 zeigt ein weiteres Ablaufdiagramm zur Darstellung eines Ausführungsbeispiels des erfindungsgemäßen Verfahrens zum Bereitstellen von lokal gespeicherten Content-Daten, insbesondere für die in Fig. 3 dargestellte Ausführungsform des Zugriffspunktes 1. Bei der in Fig. 3 dargestellten Ausführungsform weist der Zugriffspunkt 1 zusätzlich eine drahtlose oder drahtgebundene Netzwerkschnittstelle 6 zu einem Datennetzwerk 7 auf. Daher kann bei dieser Ausführungsform der Zugriffspunkt sowohl in einem Online-Betriebsmodus als auch in einem Offline-Betriebsmodus betrieben werden. Bei dieser Ausführungsform ist eine duale Darstellung der Inhalte bzw. Content-Daten des lokalen drahtlosen Netzwerkes auch über das Datennetzwerk, insbesondere das Internet, möglich. Die Datenabfrage kann dabei bei einer möglichen Ausführungsvariante unabhängig voneinander erfolgen. Bei einer weiteren möglichen Ausführungsvariante kann zu definierten Zeiten eine Datenverbindung zu dem Datennetzwerk 7 bestehen, die beispielsweise für ein Daten-Update der lokal gespeicherten Content-Daten genutzt werden kann.

Wie man in Fig. 8 erkennen kann, möchte ein Nutzer nach Erkennen des nicht passwortgeschützten lokalen drahtlosen Netzwerkes des Zugriffspunktes 1 sich in Schritt S81 Webseiten, die auf dem Zugriffspunkt 1 verfügbar ist, anzeigen lassen. Bei der in Fig. 8 dargestellten Ausführungsvariante besteht die Möglichkeit, zwischen einer Online-Anfrage und einer Offline-Anfrage zu wählen. Im Online-Betriebsmodus stellt der Browser des Nutzers im Schritt S82 die DNS-Browser-Anfrage über sein Mobilfunknetz, beispielsweise ein 3G-Netz, oder das Datennetzwerk 7, beispielsweise das Internet. Ein in dem Datennetzwerk 7 vorhandener DNS-Server gibt anschließend die bei der Registrierungsstelle registrierte IP-Adresse des entsprechenden Webservers in Schritt S83 an das mobile Endgerät 5 des Nutzers zurück. Daraufhin sendet der Browser des mobilen Endgerätes 5 des Nutzers seine Browser-Anfrage bezüglich der Webseite an die erhaltene IP-Adresse des Webservers in Schritt S84. Die Webseite bzw. die Content-Daten werden anschließend in Schritt S85 im Browser des mobilen Endgerätes 5 dem Nutzer angezeigt. Wird in Schritt S81 eine Offline-Abfrage der auf dem Zugriffspunkt 1 verfügbaren Webseite aktiviert, sendet der Browser des mobilen Endgerätes 5 in Schritt S86 eine DNS-Anfrage an die drahtlose Schnittstelle 2, beispielsweise eine WLAN-Schnittstelle, des Zugriffspunktes 1. In Schritt S87 gibt der auf dem Zugriffspunkt 1 installierte DNS-Server die IP-Adresse des Zugriffspunktes 1 in dem lokalen drahtlosen Netzwerk an das mobile Endgerät 5 zurück. Daraufhin sendet der Browser des mobilen Endgerätes seine Browser-Anfrage an den Zugriffspunkt 1 in Schritt S88. Die angefragten Content-Daten werden anschließend wiederum in Schritt S85 auf dem mobilen Endgerät 5 dem Nutzer angezeigt.

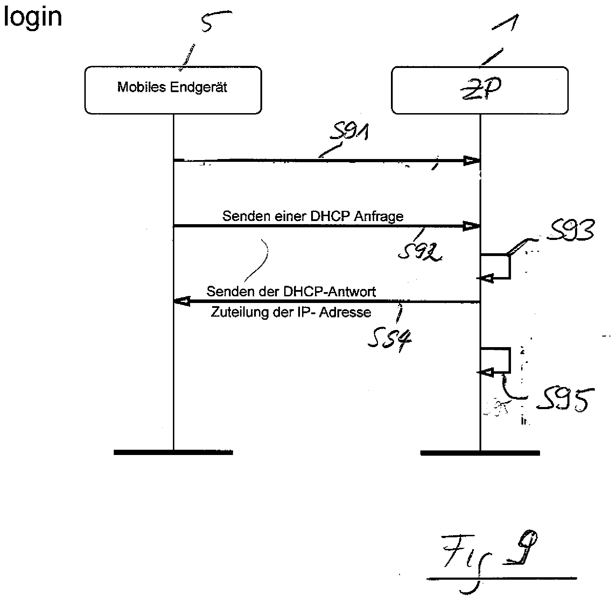

Fig. 9 zeigt ein Signaldiagramm zur Darstellung eines Ausführungsbeispiels eines Anmelde- bzw. Login-Vorganges wie es bei dem erfindungsgemäßen Verfahren eingesetzt werden kann. Zuerst verbindet sich das mobile Endgerät 5 mit dem lokalen Netzwerk entsprechend der Spezifikation des zugrunde liegenden Protokolls in Schritt S91. Bei dem Protokoll kann es sich beispielsweise um ein 802.11-Protokoll handeln. Anschließend sendet das mobile Endgerät 5 in Schritt S92 eine DHCP-Anfrage an den Zugriffspunkt 1. Daraufhin wählt der auf dem Zugriffspunkt 1 implementierter DHCP-Server 1C eine freie IP-Adresse aus der Gruppe vorkonfigurierter freier IP-Adressen in Schritt S93 aus. Die zugeteilte IP-Adresse wird dem mobilen Endgerät 5 mit einer DHCP-Antwort in Schritt S94 übermittelt. Weiterhin speichert der Zugriffspunkt 1 in Schritt S95 eine Zuordnung der gerade zugewiesenen IP-Adresse des mobilen Endgerätes 5 zu der MAC-Adresse oder IMEI des mobilen Endgerätes 5 in einen internen Datenspeicher 4 des Zugriffspunktes 1.

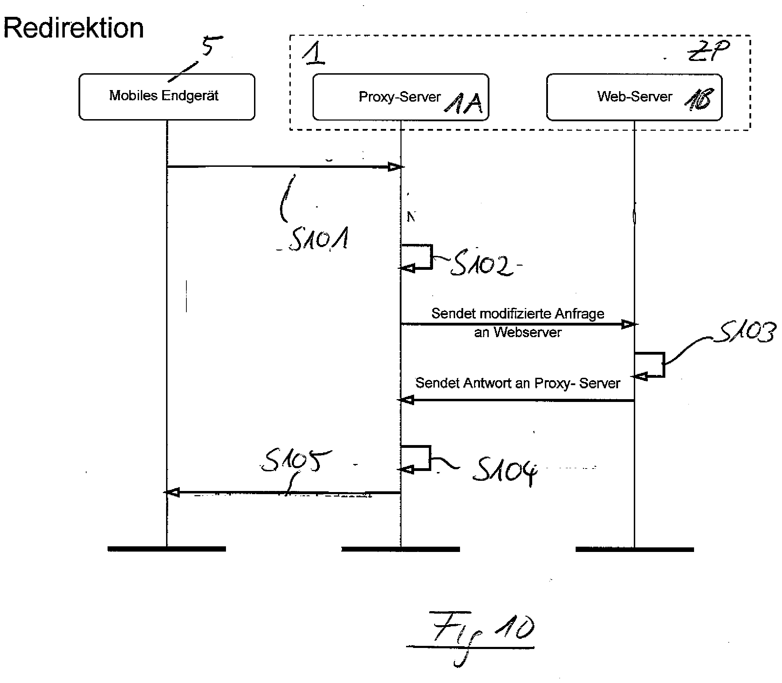

Fig. 10 zeigt ein Signaldiagramm zur Erläuterung der durch den Zugriffspunkt 1 durchgeführten Redirection bzw. Umleitung der von dem mobilen Endgerät 5 stammenden Browser-Anfrage. Wie man in Fig. 10 erkennen kann, sendet das mobile Endgerät 5 zunächst in Schritt S101 entsprechend Schritt S61 in Fig. 6 eine HTTP-Anfrage mit einem beliebigen Domainnamen über die drahtlose Schnittstelle an den Zugriffspunkt 1, welche in Schritt S1 die gesendete Browser-Anfrage empfängt. Die empfangene Browser-Anfrage enthält eine beliebige URL-Adresse bzw. Domainnamen zum Zugriff auf einen Webserver.

In Schritt S102 bzw. S62 ersetzt der auf den Zugriffspunkt implementierte Proxy-Server 1A die in der Browser-Anfrage enthaltene URL-Adresse durch eine vorkonfigurierte URL-Adresse bzw. Domainnamen. Diese vorkonfigurierte URL-Adresse bzw. Domainname gibt einen Speicherort von in dem Datenspeicher 4 des Zugriffspunktes 1 lokal gespeicherten Content-Daten an.

Die auf dem Proxy-Server 1A modifizierte Anfrage wird im Schritt S103 bzw. S63 an den internen Server, insbesondere HTTP-Server 1B, gesendet, der eine Antwort auf die modifizierte Anfrage generiert und diese Antwort an den internen Proxy-Server 1A sendet, wie in Fig. 10 dargestellt. Dabei werden die durch die ersetzte vorkonfigurierte URL-Adresse adressierten Content-Daten aus dem Datenspeicher 4 des Zugriffspunktes 1 ausgelesen.

In einem weiteren Schritt S104 bzw. S64 ersetzt der Proxy-Server 1A die vorkonfigurierte Domain bzw. URL-Adresse in dem gesamten ausgelesenen Content-Daten durch die in der Browser-Anfrage des mobilen Endgerätes 5 ursprünglich enthaltene URL-Adresse.

Anschließend sendet der Zugriffspunkt in Schritt S105 bzw. S65 die geänderte modifizierte Anfrage zurück an das mobile Endgerät 5. Dabei werden die aus dem Datenspeicher 4 des Zugriffspunktes 1 ausgelesenen Content-Daten von dem Zugriffspunkt 1 an das mobile Endgerät 5 des Nutzers als Antwort auf die von dem mobilen Endgerät 5 durch den Zugriffspunkt 1 empfangene Browser-Anfrage übertragen, wobei die Antwort die von dem Proxy-Server 1A zurückersetzten URL-Adressen enthält.

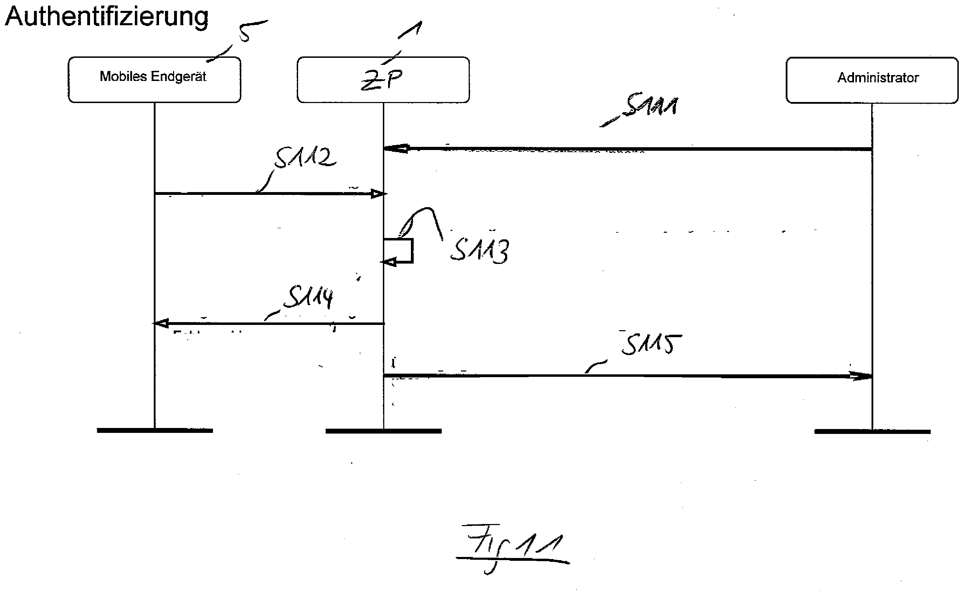

Fig. 11 zeigt ein Signalablaufdiagramm zur Darstellung eines Ausführungsbeispiels eines bei dem erfindungsgemäßen Verfahren optional verwendeten Authentifizierungsprozesses. In einem ersten Schritt 111 kann ein Administrator eine Liste von zugelassenen Authentifizierungscodes für eine Zugriffserlaubnis für bestimmte Inhalte bzw. Content-Daten auf dem Zugriffspunkt 1 konfigurieren. Die auf dem Datenspeicher 4 des Zugriffspunktes 1 lokal gespeicherten Content-Daten werden dem mobilen Endgerät 5 eines Nutzers nur dann bereitgestellt, nachdem sich der Nutzer für die jeweiligen Content-Daten bzw. Inhalte als empfangsberechtigt gegenüber dem Zugriffspunkt 1 authentifiziert hat. Wie in Fig. 11 dargestellt, sendet das mobile Endgerät 5 in dem dargestellten Ausführungsbeispiel eine Browser-Anfrage an den Zugriffspunkt 1 in Schritt S112, welche einen Authentifizierungscode einschließt. Der in der Anfrage enthaltene Authentifizierungscode wird anschließend in Schritt S113 überprüft. Dabei wird der Authentifizierungscode mit den vorkonfigurierten Authentifizierungscodes von zugelassenen Teilnehmern verglichen. Stimmt der empfangene Authentifizierungscode mit einem der vorkonfigurierten Authentifizierungscodes überein, erhält das mobile Endgerät 5 des Nutzers die entsprechende Zugriffserlaubnis auf bestimmte Content-Daten bzw. Inhalte. Optional werden Informationen über das mobile Endgerät 5, die aufgrund des Inhaltes der Anfrage des mobilen Endgerätes 5 verfügbar sind, gespeichert. Weiterhin kann ein Zeitstempel der Anfrage in dem lokalen Datenspeicher 4 des Zugriffspunktes 1 abgelegt werden. Bei den Authentifizierungscodes kann es sich beispielsweise um eine Matrikelnummer eines Studenten oder um Teilnehmernummer eines Veranstaltungsteilnehmers handeln. Ist die Authentifizierung des Nutzers erfolgreich, werden die entsprechenden Content-Daten, für die er eine Zugriffserlaubnis hat, in Schritt S114 an das mobile Endgerät 5 übermittelt. Schlägt die Authentifizierung des Nutzers jedoch fehl, erhält das mobile Endgerät 5 des Nutzers eine entsprechende Fehlermeldung in Schritt S114. Weiterhin kann in Schritt S115 bei einer möglichen Ausführungsvariante eine Liste bereits benutzter Authentifizierungscodes von dem Zugriffspunkt 1 an einen Administrator bzw. an ein Administrationssystem übertragen werden. Dabei können zusätzlich die über das jeweilige mobile Endgerät 5 des Nutzers gespeicherten Informationen, die in der Anfrage enthalten waren, an das Administrationssystem mitübertragen werden.

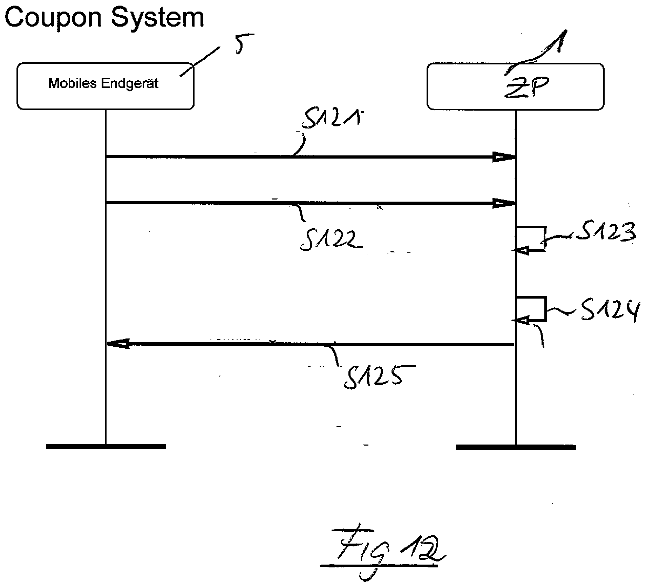

Fig. 12 zeigt ein Signaldiagramm zur Darstellung einer Ausführungsvariante des erfindungsgemäßen Verfahrens, bei dem Couponcodes an Nutzer übertragen werden können. Nach erfolgtem Einloggen in das lokale drahtlose Netzwerk in Schritt 121 sendet das mobile Endgerät 5 in Schritt S122 eine Browser-Anfrage innerhalb eines Couponcodes an den Zugriffspunkt 1. In Schritt S123 erfolgt in dem Zugriffspunkt 1 eine Speicherung von Daten, beispielsweise eines Zeitstempels der Anfrage, sowie der in der Anfrage übertragenen Informationen über das mobile Endgerät 5. Ferner wird die IP-Adresse des mobilen Endgerätes 5 auf dem internen Server abgelegt. In einem weiteren Schritt S124 wird von dem Zugriffspunkt 1 ein Couponcode in Abhängigkeit von der MAC-Adresse oder der IMEI des mobilen Endgerätes 5 generiert. Das Generieren der Content-Daten kann durch ein auf dem Zugriffspunkt 1 implementiertes Content-Management-System 1D in Abhängigkeit von der MAC-Adresse oder der IMEI des mobilen Endgerätes 5 erfolgen. In einem weiteren Schritt S125 wird der generierte Couponcode an die IP-Adresse des mobilen Endgerätes 5 als Antwort auf die in Schritt S122 empfangene Anfrage nach einem Couponcode übermittelt. Der erhaltene Couponcode kann anschließend von dem Nutzer des mobilen Endgerätes 5 dazu verwendet werden, Waren oder Dienstleistungen zu beziehen.

Wie man aus Fig. 12 erkennen kann, ist es bei dem System möglich, die gewonnenen Daten persistent zu speichern, wobei die gewonnenen Daten anschließend zentralisiert oder dezentral ausgewertet werden, um Informationen über den Kunden bzw. Nutzer zu erhalten. Die gespeicherten Informationen hinsichtlich des Nutzers können bei einer Abfrage bzw. einem Download zum Empfang eines Gutscheins bzw. Couponcodes durch das System verarbeitet werden, sodass aus den Informationen des Nutzers ein personalisierter Couponcode abgeleitet werden kann. Der Couponcode kann beispielsweise in Form eines Scancodes an das mobile Endgerät 5 des Nutzers übertragen werden. Wenn der Nutzer anschließend den erhaltenen Scancode einlöst, kann einerseits eine Authentifizierung und Zuordnung zu den personenbezogenen Daten des Nutzers stattfinden, wobei alle Informationen, die in dem Code enthalten sind, decodiert und in dem System gespeichert werden. Der übertragene Couponcode kann unterschiedliche Formen annehmen. Beispielsweise kann es sich bei dem Couponcode um einen sogenannten QR-Code handeln. Weiterhin kann der Couponcode aus einer Ziffern- oder Zahlenfolge bestehen. Diese Ziffern- und Zahlenfolge kann durch den Nutzer manuell an dafür eingerichtete Terminals eingegeben werden oder über drahtlose Technologien wie NFC automatisch an ein entsprechendes Terminal übertragen werden. Alternativ kann die Ziffern- bzw. Zeichenfolge über anderweitige Messaging-Dienste, beispielsweise SMS, Instant Messaging oder E-Mail, übertragen werden.

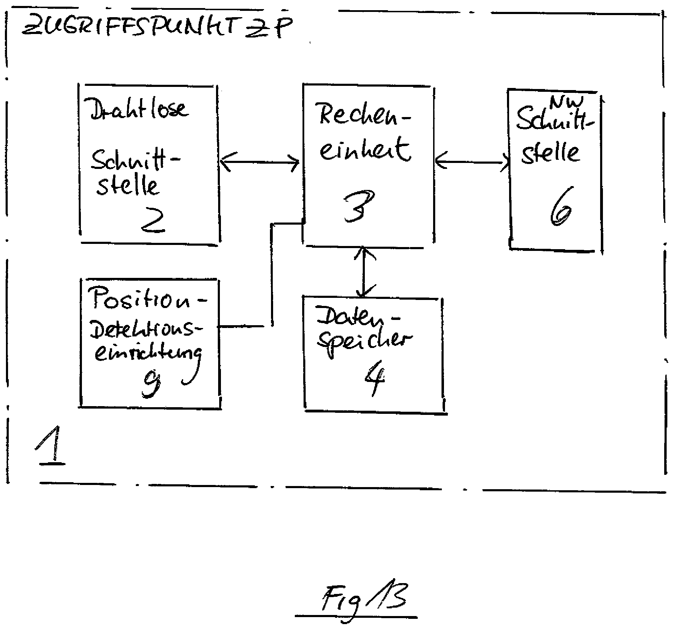

Fig. 13 zeigt ein Blockschaltbild eines weiteren Ausführungsbeispiels des erfindungsgemäßen Zugriffspunktes 1. Bei der in Fig. 3 dargestellten Implementierung weist der Zugriffspunkt 1 zusätzlich eine Positionsdetektionseinrichtung 9 auf. In manchen Anwendungsfällen ist es notwendig, dass der Zugriffspunkt 1 nicht stationär aufgestellt ist, sondern beweglich bzw. mobil ist. Bei dem in Fig. 13 dargestellten Ausführungsbeispiel wird die momentane Position des Zugriffspunktes 1 durch eine in dem Zugriffspunkt 1 implementierte Detektionseinrichtung 9 detektiert. Die in dem Datenspeicher 4 des Zugriffspunktes 1 lokal gespeicherten Content-Daten werden anschließend in Abhängigkeit von der momentanen Position des Zugriffspunktes 1 automatisch angepasst. Bei einer weiteren Ausführungsvariante wird die momentane Position des mobilen Endgerätes 5 relativ zu der detektierten momentanen Position des Zugriffspunktes 1 durch die in dem Zugriffspunkt 1 implementierte Detektionseinrichtung 9 detektiert und die in dem Datenspeicher 4 des Zugriffspunktes 1 lokal gespeicherten Content-Daten werden in Abhängigkeit von der momentanen relativen Lage des mobilen Endgerätes 5 automatisch angepasst. Bei dem in Fig. 13 dargestellten Ausführungsbeispiel kann sich der Zugriffspunkt 1 beispielsweise in einem Fahrzeug, insbesondere einem Zug, Schiff oder Flugzeug befinden. Weiterhin kann der bewegliche Zugriffspunkt 1 in einer Veranstaltung, beispielsweise einem Umzug oder einer Demonstration, mitgeführt werden.

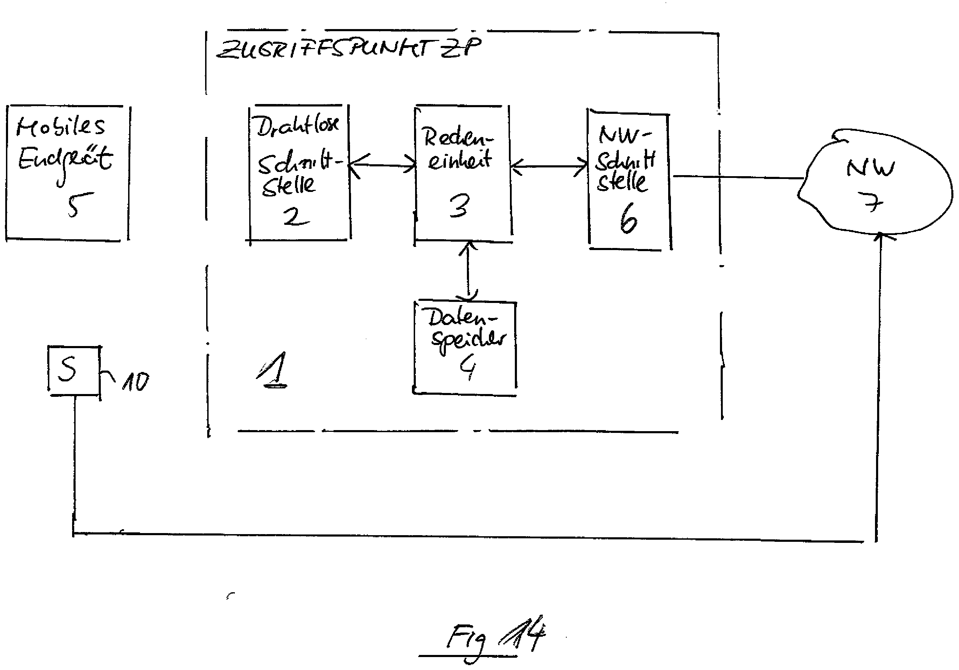

Fig. 14 zeigt ein weiteres Ausführungsbeispiel für eine Anordnung, die einen erfindungsgemäßen Zugriffspunkt 1 verwendet. Wie man aus Fig. 14 erkennen, können ein oder mehrere Sensoren 10 über das Datennetzwerk 7 an die Netzwerkschnittstelle 6 des Zugriffspunktes 1 Echtzeit-Livestreaming-Daten übertragen. Bei den Sensoren kann es sich beispielsweise um Kameras oder Mikrofone handeln, die an einem Veranstaltungsort aufgestellt sind, beispielsweise in einem Fußballstadion. Diese Livestreaming-Echtzeitdaten, welche von den Sensoren 10 abgegeben werden, können über das Netzwerk an den Datenspeicher 4 des an dem Veranstaltungsort befindlichen Zugriffspunktes 1 übertragen werden und anschließend zur Bereitstellung an die mobilen Endgeräte 5 von Nutzern bzw. Fußballfans zur Verfügung gestellt werden. Die Nutzer der mobilen Endgeräte 5 befinden sich ebenfalls an dem Veranstaltungsort, beispielsweise innerhalb des Fußballstadions. Diese Livestreaming-Echtzeitdaten bilden Content-Daten, die auf eine Browser-Anfrage der mobilen Endgeräte 5 hin lokal durch den Zugriffspunkt 1 zur Verfügung gestellt werden. Bei der in Fig. 14 dargestellten Ausführungsvariante erfolgt die Übertragung der Livestreaming-Echtzeitdaten von den Sensoren 10 an den Zugriffspunkt 1 über ein Datennetzwerk 7. Dies ist nur möglich, wenn der Zugriffspunkt 1 über eine Netzwerkschnittstelle 6 verfügt, wie in Fig. 14 dargestellt. Alternativ können die Sensoren 10 auch direkt über eine dafür vorgesehene Schnittstelle mit dem Zugriffspunkt 1 verbunden sein. Bei einer möglichen Ausführungsvariante stellen die Livestreaming-Echtzeitdaten einen Teil der als Multimediadaten an das mobile Endgerät 5 dargestellten Content-Daten dar. Lädt beispielsweise ein in einer Vorlesung befindlicher Student als Content-Daten Vorlesungsmaterial einer aktuell gehaltenen Vorlesung von dem lokalen Datenspeicher 4 des Zugriffspunktes 1 herunter, kann beispielsweise zusätzlich in einem Fenster der entsprechende Vortragende zusätzlich auf der Anzeige des mobilen Endgerätes 5 angezeigt werden. Auf diese Weise hat der Student die Möglichkeit, während des Vortrages das Vortragsskript zu lesen und gleichzeitig auf dem Display den Live-Vortrag visuell und akustisch zu verfolgen.

Bei einer möglichen Ausführungsvariante des erfindungsgemäßen Verfahrens werden die aus dem Datenspeicher 4 des Zugriffspunktes 1 ausgelesenen Content-Daten von dem Zugriffspunkt 1 an das mobile Endgerät 5 des Nutzers als Antwort auf die von dem mobilen Endgerät 5 durch den Zugriffspunkt 1 empfangene Browser-Anfrage über die drahtlose Schnittstelle übertragen. Bei einer möglichen Ausführungsvariante werden die aus dem Datenspeicher 4 des Zugriffspunktes 1 ausgelesenen Content-Daten von dem Zugriffspunkt 1 an das mobile Endgerät 5 über einen anderen Datenübertragungskanal übertragen, beispielsweise per E-Mail-Nachricht oder dergleichen. Hierzu wird beispielsweise eine in der Anfrage angegebene E-Mail-Adresse des Nutzers als Zieladresse benutzt. Hierzu ist der Zugriffspunkt 1 über eine Netzwerkschnittstelle 6 an ein Datennetzwerk, insbesondere das Internet, angeschlossen. Beispielsweise kann auf diese Weise ein Katalog eines Ausstellers, der den Zugriffspunkt 1 betreibt, an eine E-Mail-Adresse des Nutzers des mobilen Endgerätes 5 übertragen werden.

Weiterhin ist es möglich, das erfindungsgemäße System um einen Chatbereich zu erweitern. Bei dieser Ausführungsvariante kann zusätzlich ein Chatserver auf der Recheneinheit 3 des Zugriffspunktes 1 implementiert sein. Weiterhin kann das erfindungsgemäße System zusätzlich mit einem Videosystem bzw. Videokonferenzsystem erweitert werden.

Der erfindungsgemäße Zugriffspunkt 1 bietet als User Interface, beispielsweise Mobile Sites bzw. Micro-Websites an, welche auf die Bildschirmgrößen von Smartphones oder Tablet-PCs als mobile Endgeräte 5 optimiert sind und welche auf die Nutzerführung und Inhalte entsprechend angepasst sind. Diese Mobile Sites können sowohl mit einer mobilen Internetverbindung als auch lokal über die drahtlose Schnittstelle 2, insbesondere eine WLAN-Schnittstelle, des Zugriffspunktes 1 erreicht werden und sind über die Browser-Suche auffindbar. Ein wesentlicher Unterschied zu herkömmlichen Apps bzw. Applikationsprogrammen besteht darin, dass derartige Apps durch den Nutzer aktiv in einem sogenannten App Store oder einer sonstigen Anbieterplattform ausgewählt und auf dem Smartphone bzw. Tablet-PC installiert werden müssen. Dies ist bei dem erfindungsgemäßen Verfahren und dem erfindungsgemäßen Zugriffspunkt 1 nicht notwendig.

Das erfindungsgemäße Verfahren zum Bereitstellen von lokal gespeicherten Content-Daten für ein mobiles Endgerät 5 des Nutzers durch einen erfindungsgemäßen Zugriffspunkt ist vielseitig anwendbar. Beispielsweise kann ein derartiger Zugriffspunkt 1 durch einen Aussteller auf einer Messe eingesetzt werden. Dabei ist der Aussteller an den Kontaktdaten des Messebesuchers interessiert, während die Besucher an Content-Daten bzw. Informationen Interesse haben. Derartige Informationen bzw. Content-Daten werden auf herkömmlichen Messen bisher vorwiegend über Printmedien, CDs, USB-Sticks oder ggf. auch über einen QR-Code, welcher auf eine mobile Internetseite verlinkt ist, angeboten. Dabei können die Messebesucher Printmedien von dem Messestand des Ausstellers mitnehmen oder sich Informationen über eine langsame mobile Internet-verbindung ansehen, wobei die Datenübertragung zusätzlich Kosten für den Besucher verursacht. Für die Datenträger, wie beispielsweise CDs oder USB, benötigt der Kunde zudem ein Abspielgerät. Um den Interessenten bzw. Messebesucher mit den gewünschten Informationen schnell und ohne Umstände zu versorgen, ist es mit dem erfindungsgemäßen Verfahren möglich, diese Informationen bzw. Content-Daten direkt an das mobile Endgerät 5 des Nutzers lokal zu übertragen, sobald dieser sich in der Nähe des Messestandes befindet. Die an den Besucher des Messestandes übertragenen Content-Daten bzw. Informationen können beispielsweise PDF-Dateien, Bilder oder Prospekte umfassen, aber auch komplexe multimediale Präsentationen, wie beispielsweise Animationen, Soundfiles, 2D- oder 3D-Videos, multilinguale Beschreibungen in Textform oder Sprachnachrichten. Weiterhin kann beispielsweise ein Interessent oder Messebesucher über das Herunterladen von Software und Unterhaltungsmedien, beispielsweise angebotene Smartphone-Spiele, zum Verweilen an dem jeweiligen Messestand des Betreibers des Zugriffspunktes 1 angeregt werden.

Darüber hinaus bietet das erfindungsgemäße Verfahren für den Betreiber des Zugriffspunktes 1 bzw. den Aussteller die Möglichkeit, den Prozess der Kundenakquise zu optimieren. Beispielsweise kann durch simple Eingabe einer E-Mail-Adresse und des Namens der Besucher bei Bedarf die für ihn interessanten Content-Daten über die drahtlose Schnittstelle auswählen und sich per Post oder E-Mail zusenden lassen. Weiterhin ergibt sich für den Aussteller eine vereinfachte Handhabung der gewonnenen Kundendaten. Diese können sofort erfasst und im System gespeichert werden. Diese Kunden- bzw. Kontaktdaten können anschließend automatisiert für den Vertrieb aufbereitet werden. Daher entfällt eine mühsame nachträgliche Nachbearbeitung der auf der Messe gewonnenen Kontakt- bzw. Kundendaten.

Weitere Anwendungsbeispiele, bei denen sich das erfindungsgemäße Verfahren besonders eignet, sind etwa Verkaufsräume, beispielsweise Autohäuser, in denen Fahrzeuge für Kunden angeboten werden. Einen weiteren Anwendungsbereich stellt die Gastronomie dar. Mithilfe des erfindungsgemäßen Verfahrens können Kunden aktuelle Informationen über Produkte und Dienstleistungen angeboten werden. Beispielsweise können als Content-Daten eine Speisekarte des Restaurants in einem Sendebereich des Zugriffspunktes 1 des jeweiligen Restaurants angezeigt werden. In einer Ausführungsform des erfindungsgemäßen Verfahrens kann zudem dem Nutzer eine Bestellung von Produkten des Zugriffspunktbetreibers ermöglicht werden. Weiterhin ist es mit dem erfindungsgemäßen Verfahren möglich, Coupons für die Kundenakquise oder marketingunterstützende Aktionen zu übertragen. Ferner eignet sich das erfindungsgemäße Verfahren für jedwede Wartebereiche oder Haltestellen, sodass Zugriffspunkte 1 beispielsweise an Wartebereichen oder Haltestellen von Transportnetzwerken, insbesondere Bus, Bahn oder Flughafen, aufgestellt werden können. Weiterhin kann ein erfindungsgemäßer Zugriffspunkt 1 beispielsweise bei einer Touristikinformation Touristen mit Content-Daten versorgen. Weitere Beispiele sind Wartebereiche von Arztpraxen oder die Lobby eines Hotels. Bei dem erfindungsgemäßen Verfahren stehen die bereitgestellten Content-Daten direkt im Zusammenhang mit dem lokalen Bereich, in dem sich das mobile Endgerät 5 des Nutzers gerade befindet. Zum Benutzen des erfindungsgemä-βen Verfahrens ist es für den Nutzer des mobilen Endgerätes 5 nicht notwendig, zusätzliche Applikationssoftware auf seinem Endgerät 5 zu installieren. Hierdurch wird die Sicherheit gegenüber fehlerhafter Software mithilfe des erfindungsgemäßen Verfahrens zusätzlich erhöht. Zur Teilnahme an dem erfindungsgemäßen Verfahren kann sich das mobile Endgerät 5 bei dem Zugriffspunkt 1 anmelden. Dabei wird in der Regel kein Passwort abgefragt, da es im Interesse des Betreibers des Zugriffspunktes 1 ist, dass die Nutzer die Content-Daten von seinem Zugriffspunkt 1 beziehen. In der Regel erhalten die Nutzer der mobilen Endgeräte 5 die Content-Daten kostenfrei. Bei einer Ausführungsvariante ist es auch möglich, dass die Nutzer für den bezogenen Content bzw. Inhalt bezahlen. Beispielsweise kann der Nutzer eine E-Mail- oder Telefonnummer des Nutzers eingegeben, um einen E-Payment-Link zu erhalten. Weiterhin kann die Bezahlung bei einer alternativen Ausführungsvariante über eine Near Field Communication NFC-Schnittstelle erfolgen.

## Patentansprüche

1. Verfahren zum Bereitstellen von lokal gespeicherten Content-Daten für ein mobiles Endgerät (5) eines Nutzers durch einen Zugriffspunkt (1) mit den folgenden Schritten:
(a) Empfangen (S1) einer von dem mobilen Endgerät (5) über eine drahtlose Schnittstelle (2) an den Zugriffspunkt (1) gesendeten Browser-Anfrage,
wobei die Browser-Anfrage eine URL-Adresse zum Zugriff auf einen Webserver enthält;
(b) Ersetzen (S2) der in der Browser-Anfrage enthaltenen URL-Adresse des Webservers durch eine vorkonfigurierte URL-Adresse durch einen auf dem Zugriffspunkt (1) implementierten Proxy-Server (1A),
wobei die vorkonfigurierte URL-Adresse einen Speicherort von in einem Datenspeicher (4) des Zugriffspunktes (1) lokal gespeicherten Content-Daten angibt, wobei die in der Browser-Anfrage enthaltene URL-Adresse in einem Zwischenspeicher zwischengespeichert wird;
(c) Auslesen (S3) der durch die ersetzte vorkonfigurierte URL-Adresse adressierten Content-Daten aus dem Datenspeicher (4) des Zugriffspunktes (1);
wobei das Verfahren durch folgende Schritte charakterisiert wird:
(d) Rückersetzen (S4) der vorkonfigurierten URL-Adresse in den gesamten ausgelesenen Content-Daten durch die in der Browser-Anfrage des mobilen Endgerätes (5) ursprünglich enthaltene URL-Adresse, die aus dem Zwischenspeicher ausgelesen wird, wobei das Rückersetzen durch den auf dem Zugriffspunkt (1) implementierten Proxy-Server (1A) erfolgt; und
(e) Übertragen (S5) der aus dem Datenspeicher (4) des Zugriffspunktes (1) ausgelesenen Content-Daten von dem Zugriffspunkt (1) an das mobile Endgerät (5) des Nutzers als Antwort auf die von dem mobilen Endgerät (5) durch den Zugriffspunkt (1) empfangene Browser-Anfrage,
wobei an das mobile Endgerät (5) des Nutzers bei der Antwort auf die Browser-Anfrage des mobilen Endgerätes (5) eine Mitteilung, dass die in der Antwort enthaltenen Content-Daten von einer durch den Zugriffspunkt (1) ersetzten URL-Adresse und nicht von der in der Browser-Anfrage ursprünglich enthaltenen URL-Adresse stammen, derart übertragen wird, dass diese Mitteilung vom Browser des mobilen Endgerätes (5) für den Nutzer sichtbar dargestellt wird,
wobei die Antwort die von dem Proxy-Server (1A) zurückersetzten URL-Adressen enthält.

2. Verfahren nach Anspruch 1,
wobei der MAC-Adresse oder IMEI des mobilen Endgerätes (5) eine zugewiesene Client-IP-Adresse zugeordnet wird.

3. Verfahren nach einem der vorangehenden Ansprüche 1 oder 2,
wobei die lokal gespeicherten Content-Daten dem mobilen Endgerät (5) des Nutzers bereitgestellt werden, nachdem sich der Nutzer für die jeweiligen Content-Daten als empfangsberechtigt gegenüber dem Zugriffspunkt (1) authentifiziert hat.

4. Verfahren nach Anspruch 3,
wobei das mobile Endgerät (5) zur Authentifizierung des Nutzers einen Authentifizierungscode an den Zugriffspunkt (1) überträgt, der mit vorkonfigurierten Authentifizierungscodes von zugelassenen Teilnehmern, insbesondere einer Immatrikulationsnummer oder einer Veranstaltungsteilnehmernummer, verglichen wird.

5. Verfahren nach einem der vorangehenden Ansprüche 1 bis 4,
wobei die Content-Daten durch ein auf dem Zugriffspunkt (1) implementiertes Content-Management-System (1D) in Abhängigkeit von der MAC-Adresse oder IMEI des mobilen Endgerätes (5) generiert und an das mobile Endgerät (5) übertragen werden.

6. Verfahren nach Anspruch 5,
wobei die in Abhängigkeit von der MAC-Adresse des mobilen Endgerätes (5) durch das Content-Management-System (1D) generierten Content-Daten einen Couponcode zum Bezug von Waren oder Dienstleistungen durch den Nutzer des mobilen Endgerätes (5) in der lokalen Umgebung des Zugriffspunktes (1) aufweisen.

7. Verfahren nach einem der vorangehenden Ansprüche 1 bis 6,
wobei die an das mobile Endgerät (5) übertragenen Content-Daten Multimediadaten, insbesondere Textdaten, Bilddaten, Audiodaten, Videodaten, Chatdaten und Livestreaming-Echtzeitdaten aufweisen.

8. Verfahren nach Anspruch 7,
wobei die Livestreaming-Echtzeitdaten von Sensoren (10), insbesondere von Kameras und Mikrofonen, in einem Veranstaltungsbereich eines Veranstaltungsortes aufgenommen und an den Datenspeicher (4) des an dem Veranstaltungsort befindlichen Zugriffspunktes (1) zur Bereitstellung an mobile Endgeräte (5) in Echtzeit übermittelt werden.

9. Verfahren nach einem der vorangehenden Ansprüche 1 bis 8,
wobei eine momentane Position des Zugriffspunktes (1) durch eine in dem Zugriffspunkt implementierte Detektionseinrichtung (9) detektiert wird und die in dem Datenspeicher (4) des Zugriffspunktes (1) lokal gespeicherten Content-Daten in Abhängigkeit von der momentanen Position des Zugriffspunktes (1) automatisch angepasst werden.

10. Verfahren nach Anspruch 9,
wobei die auf das mobile Endgerät (5) übertragenen Echtzeitdaten auf dem Datenspeicher (4) des Zugriffspunktes (1) gespeichert werden um einen späteren Zugriff durch das mobile Endgerät (5) zu ermöglichen.

11. Verfahren nach einem der vorangehenden Ansprüche 1 bis 10,
wobei ein auf dem Zugriffspunkt (1) implementiertes Nutzer-Verwaltungs-System auf eine Anfrage des mobilen Endgerätes (5) die drahtlose Verbindung zu dem mobilen Endgerät (5) trennt und eine Verbindungsaufnahme des mobilen Endgerätes (5) für eine vorgegebene Zeitspanne verhindert.

12. Verfahren nach Anspruch 11,
wobei eine Verbindungsaufnahme des mobilen Endgerätes (5) zum Zugriffspunkt (1) durch sofortigen Verbindungsabbruch seitens des Zugriffspunktes (1) verhindert wird, falls die MAC-Adresse oder IMEI des mobilen Endgerätes (5) in einer auf dem Datenspeicher (4) des Zugriffspunktes gespeicherten Liste der momentan zu blockierenden MAC-Adressen oder IMEI übereinstimmt.

13. Verfahren nach einem der vorangehenden Ansprüche 1 bis 12,
wobei die drahtlose Schnittstelle (2) eine IEEE 802.11 Schnittstelle, eine Bluetooth-Schnittstelle, eine GSM-Schnittstelle, eine GPRS-Schnittstelle, eine EDGE-Schnittstelle, eine UMTS-Schnittstelle oder eine LTE-Schnittstelle ist.

14. Zugriffspunkt (1) zum Bereitstellen von lokal gespeicherten Content-Daten für ein mobiles Endgerät (5) eines Nutzers wobei der Zugriffspunkt (1) einen Proxy-Server (1A) beinhaltet , der eine URL-Adresse, welche in einer von einem mobilen Endgerät (5) über eine drahtlose Schnittstelle (2) empfangenen Browser-Anfrage enthalten ist, durch eine vorkonfigurierte URL-Adresse ersetzt, die einen Speicherort von in einem Datenspeicher (4) des Zugriffspunktes (1) lokal gespeicherten Content-Daten angibt, welche aus dem Datenspeicher (4) des Zugriffspunktes (1) ausgelesen und an das mobile Endgerät (5) über die drahtlose Schnittstelle (2) als Antwort auf die von dem mobilen Endgerät (5) durch den Zugriffspunkt (1) empfangene Browser-Anfrage übertragen werden, nachdem die vorkonfigurierte URL-Adresse in den gesamten ausgelesenen Content-Daten durch den Proxy-Server (1A) durch die in der Browser-Anfrage des mobilen Endgerätes (5) ursprünglich enthaltene URL-Adresse zurückersetzt worden ist, wobei an das mobile Endgerät (5) des Nutzers bei der Antwort auf die Browser-Anfrage des mobilen Endgerätes (5) eine Mitteilung, dass die in der Antwort enthaltenen Content-Daten von einer durch den Zugriffspunkt (1) ersetzten URL-Adresse und nicht von der in der Browser-Anfrage ursprünglich enthaltenen URL-Adresse stammen, derart übertragen wird, dass diese Mitteilung vom Browser des mobilen Endgerätes (5) für den Nutzer sichtbar dargestellt wird.

15. Zugriffspunkt nach Anspruch 14,
wobei die drahtlose Schnittstelle (2) eine IEEE 802.11 Schnittstelle, eine Bluetooth-Schnittstelle, eine GSM-Schnittstelle, eine GPRS-Schnittstelle, eine EDGE-Schnittstelle, eine UMTS-Schnittstelle oder eine LTE-Schnittstelle ist.

## Claims

1. Method for the provision of locally stored content data for a mobile terminal (5) of a user through an access point (1), comprising the following steps:
(a) receiving (S1) a browser request sent by the mobile terminal (5) via a wireless interface (2) to the access point (1),
wherein the browser request contains a URL address for access to a web server;
(b) replacing (S2) the URL address of the web server contained in the browser request by a preconfigured URL address through a proxy server (1A) implemented at the access point (1),
wherein the preconfigured URL address indicates a storage location of content data stored locally in a data store (4) of the access point (1);
wherein the URL address contained in the browser request is buffered in a buffer;
(c) reading out (S3) the content data addressed through the replaced preconfigured URL address from the data store (4) of the access point (1);
wherein the method is **characterised by** the following steps:
(d) back-replacing (S4) the preconfigured URL address in all the read-out content data by the URL address originally contained in the browser request of the mobile terminal (5), which URL address is read out from the buffer, wherein the back-replacement is effected through the proxy server (1A) implemented at the access point (1); and
(e) transmitting (S5) the content data read out from the data store (4) of the access point (1) from the access point (1) to the mobile terminal (5) of the user as a reply to the browser request received from the mobile terminal (5) through the access point (1),
wherein a notification that the content data contained in the reply originate from a URL address replaced through the access point (1) and not from the URL address originally contained in the browser request is transmitted to the mobile terminal (5) of the user upon reply to the browser request of the mobile terminal (5) in such a way that this notification is presented by the browser of the mobile terminal (5) in a manner visible to the user,
wherein the reply contains the URL addresses back-replaced by the proxy server (1A).

2. Method as claimed in claim 1,
wherein the MAC address or IMEI of the mobile terminal (5) is allocated an assigned client IP address.

3. Method as claimed in any one of the preceding claims 1 or 2,
wherein the locally stored content data are provided to the mobile terminal (5) of the user after the user has authenticated himself as being authorised to receive the respective content data with respect to the access point (1).

4. Method as claimed in claim 3,
wherein, for authentication of the user, the mobile terminal (5) transmits an authentication code to the access point (1), which is compared with preconfigured authentication codes of permitted participants, in particular an immatriculation number or an event participant number.

5. Method as claimed in any one of the preceding claims 1 to 4,
wherein the content data are generated by a content management system (ID) implemented at the access point (1) in dependence upon the MAC address or IMEI of the mobile terminal (5) and are transmitted to the mobile terminal (5).

6. Method as claimed in claim 5,
wherein the content data generated by the content management system (ID) in dependence upon the MAC address of the mobile terminal (5) comprise a coupon code for acquisition of goods or services by the user of the mobile terminal (5) in the local surroundings of the access point (1).

7. Method as claimed in any one of the preceding claims 1 to 6,
wherein the content data transmitted to the mobile terminal (5) comprise multimedia data, in particular text data, image data, audio data, video data, chat data and livestreaming real-time data.

8. Method as claimed in claim 7,
wherein livestreaming real-time data are picked up by sensors (10), in particular cameras and microphones, in an event region of an event location and are transferred in real time to the data store (4) of the access point (1) located at the event location for provision to mobile terminals (5).

9. Method as claimed in any one of the preceding claims 1 to 8,
wherein a momentary position of the access point (1) is detected by a detection device (9) implemented in the access point and the content data locally stored in the data store (4) of the access point (1) are automatically adapted in dependence upon the momentary position of the access point (1).

10. Method as claimed in claim 9,
wherein the real-time data transmitted to the mobile terminal (5) are stored on the data store (4) of the access point (1) in order to permit later access through the mobile terminal (5).

11. Method as claimed in any one of the preceding claims 1 to 10,
wherein, upon request of the mobile terminal (5), a user administration system implemented at the access point (1) breaks the wireless connection to the mobile terminal (5) and prevents establishment of a connection of the mobile terminal (5) for a preset period of time.

12. Method as claimed in claim 11,
wherein establishment of a connection of the mobile terminal (5) to the access point (1) is prevented by immediate breaking of the connection on the part of the access point (1) if the MAC address or IMEI of the mobile terminal (5) conforms to the MAC address or IMEI to be momentarily blocked in a list stored on the data store (4) of the access point.

13. Method as claimed in any one of the preceding claims 1 to 12,
wherein the wireless interface (2) is an IEEE 802.11 interface, a Bluetooth interface, a GSM interface, a GPRS interface, an EDGE interface, a UMTS interface or an LTE interface.

14. Access point (1) for the provision of locally stored content data for a mobile terminal (5) of a user, wherein the access point (1) contains a proxy server (1A) which replaces a URL address, which is contained in a browser request received from a mobile terminal (5) via a wireless interface (2), by a preconfigured URL address, which indicates a storage location of content data which are stored locally in a data store (4) of the access point (1) and which are read out from the data store (4) of the access point (1) and are transmitted to the mobile terminal (5) via the wireless interface (2) as a reply to the browser request received from the mobile terminal (5) through the access point (1), after the preconfigured URL address has been back-replaced in all the read-out content data through the proxy server (1A) by the URL address originally contained in the browser request of the mobile terminal (5), wherein a notification that the content data contained in the reply originate from a URL address replaced through the access point (1) and not from the URL address originally contained in the browser request is transmitted to the mobile terminal (5) of the user upon reply to the browser request of the mobile terminal (5) in such a way that this notification is presented by the browser of the mobile terminal (5) in a manner visible to the user.

15. Access point as claimed in claim 14,
wherein the wireless interface (2) is an IEEE 802.11 interface, a Bluetooth interface, a GSM interface, a GPRS interface, an EDGE interface, a UMTS interface or an LTE interface.

## Revendications

1. Procédé de fourniture de données de contenu localement mémorisées pour un terminal mobile (5) d'un usager au moyen d'un point d'accès (1), comprenant les étapes suivantes :
(a) réception (S1) d'une requête de navigateur émise au point d'accès (1) par le terminal mobile (5) par l'intermédiaire d'une interface (2) sans fil,
la requête de navigateur contenant une adresse URL pour l'accès à un serveur Internet ;
(b) substitution (S2) de l'adresse URL du serveur Internet, contenue dans la requête de navigateur, par une adresse URL préconfigurée au moyen d'un serveur proxy (1A) mis en oeuvre au point d'accès (1),
l'adresse URL préconfigurée indiquant un endroit de mémorisation de données de contenu localement mémorisées dans une mémoire de données (4) du point d'accès (1),
l'adresse URL contenue dans la requête de navigateur étant temporairement mémorisée dans une mémoire tampon ;
(c) lecture (S3), à partir de la mémoire de données (4) du point d'accès (1), des donnés de contenu adressées au moyen de l'adresse URL préconfigurée substituée ;
le procédé étant **caractérisé par** les étapes suivantes :
(d) substitution en retour (S4) de l'adresse URL préconfigurée, dans toutes les données de contenu lues, par l'adresse URL contenue initialement dans la requête de navigateur du terminal mobile (5), laquelle est lue dans la mémoire tampon, la substitution en retour étant réalisée par le serveur proxy (1A) mis en oeuvre au point d'accès (1) ; et
(e) transmission (S5), par le point d'accès (1), au terminal mobile (5) de l'usager des données de contenu lues dans la mémoire de données (4) en tant que réponse à la requête de navigateur reçue par le terminal mobile (5) au moyen du point d'accès (1),
une information, indiquant que les données de contenu contenues dans la réponse proviennent d'une adresse URL substituée au moyen du point d'accès (1) et non de l'adresse URL initialement contenue dans la requête de navigateur, étant transmise au terminal mobile (5) de l'usager lors de la réponse à la requête de navigateur, de manière à ce que cette information soit représentée de manière visible pour l'usager par le navigateur du terminal mobile (5),
la réponse contenant les adresses URL substituées en retour par le serveur proxy (1A).

2. Procédé selon la revendication 1,
dans lequel une adresse IP client attribuée est associée à l'adresse MAC ou IMEI du terminal mobile (5).

3. Procédé selon l'une quelconque des revendications précédentes 1 ou 2,
dans lequel les données de contenu localement mémorisées sont fournies au terminal mobile (5) de l'usager une fois que l'usager s'est authentifié, pour les données de contenu respectives, en tant que personne habilitée vis-à-vis du point d'accès (1).

4. Procédé selon la revendication 3,
dans lequel le terminal mobile (5), pour l'authentification de l'usager, transmet un code d'authentification au point d'accès (1), lequel est comparé à des codes d'authentification préconfigurés d'usagers habilités, notamment à un numéro d'immatriculation ou un à numéro de participant à une manifestation.

5. Procédé selon l'une quelconque des revendications précédentes 1 à 4,
dans lequel les données de contenu sont générées au moyen d'un système de gestion de contenu (1D) mis en oeuvre au point d'accès (1), en fonction de l'adresse MAC ou IMEI du terminal mobile (5), et sont transmises au terminal mobile (5).

6. Procédé selon la revendication 5,
dans lequel les données de contenu générées au moyen du système de gestion de données (1D) en fonction de l'adresse MAC du terminal mobile (5) présentent un code coupon pour l'acquisition de marchandises ou de prestations par l'usager du terminal mobile (5) dans l'environnement local du point d'accès (1).

7. Procédé selon l'une quelconque des revendications précédentes 1 à 6,
dans lequel les données de contenu transmises au terminal mobile (5) présentent des données multimédia, notamment des données de texte, des données d'image, des données audio, des données vidéo, de données de chat et des données en temps réel de diffusion en flux.

8. Procédé selon la revendication 7,
dans lequel les données en temps réel de diffusion en flux sont enregistrées par des capteurs (10), notamment des caméras et des microphones, dans une zone de manifestation d'un lieu de manifestation et sont transmises en temps réel à la mémoire de données du point d'accès (1) se trouvant au lieu de manifestation pour la fourniture à des terminaux mobiles (5).

9. Procédé selon l'une quelconque des revendications précédentes 1 à 8,
dans lequel une position momentanée du point d'accès (1) est détectée par un dispositif de détection (9) mis en oeuvre au point d'accès, et dans lequel les données de contenu localement mémorisées dans la mémoire de données (4) du point d'accès (1) sont automatiquement adaptées en fonction de la position momentanée du point d'accès (1).

10. Procédé selon la revendication 9,
dans lequel les données en temps réel transmises sur le terminal mobile (5) sont mémorisées dans la mémoire de données (4) du point d'accès (1) afin de permettre un accès ultérieur par le terminal mobile (5).

11. Procédé selon l'une quelconque des revendications précédentes 1 à 10,
dans lequel un système de gestion d'usager mis en oeuvre au point d'accès (1) coupe la liaison sans fil vers le terminal mobile (5) sur demande du terminal mobile (5) et empêche un établissement de liaison du terminal mobile (5) pour une période de temps prédéfinie.

12. Procédé selon la revendication 11,
dans lequel un établissement de liaison du terminal mobile (5) vers le point d'accès (1) est empêché par interruption de liaison immédiate du côté du point d'accès (1) au cas où l'adresse MAC ou IMEI du terminal mobile (5) concorde dans une liste, mémorisée dans la mémoire de données (4) du point d'accès, des adresses MAC ou IMEI à bloquer momentanément.

13. Procédé selon l'une quelconque des revendications précédentes 1 à 12,
dans lequel l'interface (2) sans fil est une interface IEEE 802.11, une interface Bluetooth, une interface GSM, une interface GPRS, une interface EDGE, une interface UMTB ou une interface LTE.

14. Point d'accès (1) destiné à la fourniture de données de contenu localement mémorisées pour un terminal mobile (5) d'un usager, dans lequel le point d'accès (1) comprend un serveur proxy (1A) qui substitue une adresse URL, laquelle est contenue dans une requête de navigateur reçue par un terminal mobile (5) par l'intermédiaire d'une interface (2) sans fil, par une adresse URL préconfigurée qui indique un lieu de mémorisation de données de contenu localement mémorisées dans une mémoire de données (4) du point d'accès (1), lesquelles sont lues dans la mémoire de données (4) du point d'accès (1) et sont transmises au terminal mobile (5) par l'intermédiaire de l'interface (2) sans fil en tant que réponse de navigateur reçue par le terminal mobile (5) au moyen du point d'accès (1), une fois que l'adresse URL préconfigurée ait été substituée en retour, dans toutes les données de contenu lues, au moyen du serveur proxy (1A), par l'adresse URL initialement contenue dans la requête de navigateur du terminal mobile (5), dans lequel une information, indiquant que les données de contenu contenues dans la réponse proviennent d'une adresse URL substituée par le point d'accès (1) et non de l'adresse URL initialement contenue dans la requête de navigateur, est transmise au terminal mobile (5) de l'usager lors de la réponse à la requête de navigateur, de manière à ce que cette information soit représentée de manière visible pour l'usager par le navigateur du terminal mobile (5).

15. Point d'accès selon la revendication 14,
dans lequel l'interface (2) sans fil est une interface IEEE 802.11, une interface Bluetooth, une interface GSM, une interface GPRS, une interface EDGE, une interface UMTB ou une interface LTE.
